# EUROPÄISCHE PATENTANMELDUNG

(11) **EP 3 109 023 A1**
(43) Veröffentlichungstag der Anmeldung: **28.12.2016**
(21) Anmeldenummer: 16001432.0
(22) Anmeldetag: 27.06.2016
(51) Int. Cl.: B29C 41/18, B29C 41/38

(54) **WERKZEUGVORRICHTUNG ZUR HERSTELLUNG EINES KUNSTSTOFF-HAUTSTÜCKS**

(30) Priorität: 25.06.2015 DE 102015008138
(71) Anmelder: Faurecia Innenraum Systeme GmbH, 76767 Hagenbach (DE)
(72) Erfinder: Chevroton, Vincent, FR 67610 La Wantzenau (FR); Flecher, Stéphan, FR 67480 Rountzenheim (FR); Julien, Alain, FR 25310 Roches les Blamont (FR); Lecolloter, Gwenael, 35200 Rennes (FR)
(74) Vertreter: Schatt, Markus F.

(57) **Zusammenfassung**

Werkzeugvorrichtung (10) zur Herstellung eines Kunststoff-Hautstücks (H), die Werkzeugvorrichtung (10) aufweisend:
- ein Formwerkzeug (20), das aus einem Formteil (30) mit einer Formteil-Innenfläche (30a), einem Aufnahmebehälter (40) und einer Öffnungs- und Schließvorrichtung (70) gebildet ist, mit der das Formteil (30) und der Aufnahmebehälter (40) relativ zueinander zwischen einer geschlossenen und einer offenen Stellung bewegbar sind,
- zumindest eine Abdeckungsvorrichtung (50) mit einer Abdeckungsoberfläche (50a) und
- eine Führungsanordnung (F) mit einer ersten Führungsvorrichtung (110) und mit einer zweiten Führungsvorrichtung (120), durch die die Relativbewegung zwischen Formteil (30) und Aufnahmebehälter (40) in eine Bewegung der Abdeckungsvorrichtung (50) zwischen einer Freigabestellung, bei der die Abdeckungsoberfläche (50a) derselben von der Formteil-Innenfläche (30a) abgesetzt ist, und einer Abdeckungsstellung, bei der die Abdeckungsoberfläche (50a) derselben einen Abdeckungsabschnitt (31) der Formteil-Innenfläche (30a) abdeckt, übertragen wird.

## Beschreibung

Die Erfindung betrifft eine Werkzeugvorrichtung zur Herstellung eines Kunststoff-Hautstücks.

Aus der DE 39 30 603 C2 ist eine Vorrichtung zur Herstellung eines Kunststoff-Hautstücks bekannt.

Aufgabe der vorliegenden Erfindung ist, eine Werkzeugvorrichtung zur Herstellung eines Kunststoff-Hautstücks bereitzustellen, mit der bzw. mit dem auf effiziente Weise die Herstellung eines Kunststoff-Hautstücks mit einer Öffnung möglich ist.

Diese Aufgabe wird mit den Merkmalen der unabhängigen Ansprüche gelöst. Weitere Ausführungsformen sind in den auf diese jeweils rückbezogenen Unteransprüchen angegeben.

Nach einem ersten Aspekt der Erfindung ist eine Werkzeugvorrichtung zur Herstellung eines Kunststoff-Hautstück vorgesehen, wobei die Werkzeugvorrichtung aufweist:
- ein Formwerkzeug, das aus einem Formteil mit einer Formteil-Innenfläche, einem Aufnahmebehälter und einer Öffnungs- und Schließvorrichtung gebildet ist,
- zumindest eine Abdeckungsvorrichtung mit einer Abdeckungsoberfläche und
- eine Anlagevorrichtung,
- eine Führungsanordnung mit einer ersten und einer zweiten Führungsvorrichtung, wobei die erste Führungsvorrichtung die Abdeckungsvorrichtung oder ein Abdeckteil derselben an einer der Komponenten (a) dem Aufnahmebehälter oder (b) dem Formteil als erste Formwerkzeug-Komponente bewegungs-koppelt, wobei die zweite Führungsvorrichtung die Abdeckungsvorrichtung und die Anlagevorrichtung bewegungs-koppelt,
- eine Betätigungsvorrichtung, die die Anlagevorrichtung und die jeweils andere der Komponenten (a) oder (b) als eine zweite Formwerkzeug-Komponente bewegungs-koppelt,
wobei bei einer Bewegung der ersten und der zweiten Formwerkzeug-Komponente von einer offenen in eine geschlossene Stellung die Anlagevorrichtung und die jeweilige zweite Formwerkzeug-Komponente bei einer Formwerkzeug-Anlagestellung in Anlage miteinander gebracht wird und durch Führung der ersten und zweiten Führungsvorrichtung die Abdeckungsoberfläche von einer Freigabestellung, bei der die Abdeckungsoberfläche von der Formteil-Innenfläche und die Anlagevorrichtung von der Primär-Komponente abgesetzt ist, in Anlage mit einem Abdeckungsabschnitt der Formteil-Innenfläche bewegt wird.

Die erste und die zweite Führungsvorrichtung oder eine dieser beiden kann als Linearführung bzw. können als Linearführungen jeweils insbesondere mit einer Führungsbahn realisiert sein, die kurvenförmig oder geradlinig ausgeführt sein kann.

Nach einer Ausführungsform der Werkzeugvorrichtung ist vorgesehen, dass die Betätigungsvorrichtung die Anlagevorrichtung mit dem Aufnahmebehälter koppelt, wobei die Anlagevorrichtung in der geschlossenen Stellung des Formwerkzeugs in der Abdeckungsstellung an der Formteil-Innenfläche gelegen ist, wobei die Anlagevorrichtung an einer ersten Führungskomponente insbesondere bewegungsfest fixiert ist, die mit einer an der Abdeckungsvorrichtung fixierten zweiten Führungskomponente bewegungs-gekoppelt ist.

Nach einer weiteren Ausführungsform der Werkzeugvorrichtung ist vorgesehen, dass die erste Führungsvorrichtung eine sich in einer Längsrichtung flächig erstreckende erste Führungskomponente und die zweite Führungsvorrichtung eine sich in einer Längsrichtung flächig erstreckende zweite Führungskomponente aufweist, die bei einer Bewegung von Formteil und Aufnahmebehälter in ihre geschlossene Stellung in Anlage miteinander sind, dabei entlang ihren jeweiligen Längsrichtungen aneinander geführt sind und die Bewegung von Formteil und der Aufnahmebehälter relativ zueinander in die geschlossene Stellung in eine Bewegung der Abdeckungsvorrichtung in die Abdeckungsstellung umzulenken.

Nach einer dazu alternativen weiteren Ausführungsform der Werkzeugvorrichtung ist die zweite Führungsvorrichtung nach einer der beiden folgenden Alternativen gebildet:
- die zweite Führungsvorrichtung weist auf: eine Führungsbahn, die an der Abdeckungsvorrichtung oder einem Abdeckteil derselben fixiert ist, und ein an dieser bewegbar geführtes zweites Koppelteil, das an der Anlagevorrichtung fixiert ist,
- die zweite Führungsvorrichtung weist auf: eine Führungsbahn, die an der Anlagevorrichtung fixiert ist, und ein an dieser bewegbar geführtes zweites Koppelteil, das an der Abdeckungsvorrichtung fixiert ist.

Bei dieser Ausführungsform der Werkzeugvorrichtung kann auch vorgesehen sein, dass die Verbindungsvorrichtung mit einem dritten Koppelteil verbunden ist und wobei das dritte Koppelteil an eine dritte Führungsbahn gekoppelt ist, die an dem Aufnahmebehälter oder einem Stützabschnitt desselben befestigt ist.

Nach einer weiteren Ausführungsform der Werkzeugvorrichtung ist vorgesehen, dass die zweite Führungsvorrichtung aufweist:
- eine Kulissenkörper-Anordnung, die drehbar an der ersten Formwerkzeug-Komponente gelagert ist,
- eine erste Kulissenkopplung, mit der die Kulissenkörper-Anordnung mit der Anlagevorrichtung bewegungs-gekoppelt ist,
- eine zweite Kulissenkopplung, mit der die Kulissenkörper-Anordnung mit der Abdeckungsvorrichtung bewegungs-gekoppelt ist.

Nach einer weiteren Ausführungsform der Werkzeugvorrichtung ist vorgesehen, dass die Werkzeugvorrichtung eine Vorspannvorrichtung aufweist, die die Anlagevorrichtung in eine Stellung von dem Aufnahmebehälter aus gesehen in Richtung zu dem Formteil vorspannt.

Nach einem weiteren Aspekt der Erfindung ist eine Werkzeugvorrichtung zur Herstellung eines Kunststoff-Hautstücks vorgesehen, wobei die Werkzeugvorrichtung aufweist:
- ein Formwerkzeug, das aus einem Formteil mit einer Formteil-Innenfläche, einem Aufnahmebehälter und einer Öffnungs- und Schließvorrichtung gebildet ist, mit der das Formteil und der Aufnahmebehälter relativ zueinander zwischen einer geschlossenen und einer offenen Stellung bewegbar sind,
- zumindest eine Abdeckungsvorrichtung mit einer Abdeckungsoberfläche und
- eine Führungsanordnung mit einer ersten Führungsvorrichtung, durch die die Abdeckungsvorrichtung mit einer der Komponenten (a) dem Aufnahmebehälter oder (b) dem Formteil bewegungsgekoppelt ist, und mit einer zweiten Führungsvorrichtung, die die Abdeckungsvorrichtung an diejenige der Komponenten (a) oder (b) koppelt, die nicht mit der ersten Führungsvorrichtung bewegungsgekoppelt ist, wobei durch die Führungsanordnung die Abdeckungsvorrichtung zwischen einer Abdeckungsstellung, bei der die Abdeckungsoberfläche einen Abdeckungsabschnitt der Formteil-Innenfläche abdeckt, und einer Freigabestellung bewegbar ist, bei der die Abdeckungsoberfläche von der Formteil-Innenfläche abgesetzt ist, wobei die Bewegung zwischen der Abdeckungsstellung und der Freigabestellung mechanisch mit der Bewegung des Formteils relativ zum Aufnahmebehälter gekoppelt ist.

Die erste und die zweite Führungsvorrichtung oder eine dieser beiden kann als Linearführung bzw. können als Linearführungen jeweils insbesondere mit einer Führungsbahn realisiert sein, die kurvenförmig oder geradlinig ausgeführt sein kann.

Dabei ist nach einer weiteren Ausführungsform der Werkzeugvorrichtung vorgesehen, dass die erste Führungsvorrichtung als eine an der Abdeckungsvorrichtung angeordnete sich in einer Längsrichtung flächig erstreckende erste Führungskomponente und die zweite Führungsvorrichtung als eine sich in einer Längsrichtung flächig erstreckende zweite Führungskomponente ausgebildet ist, die an einer der Komponenten (a) oder (b) angeordnet ist, die nicht mit der ersten Führungsvorrichtung bewegungsgekoppelt ist, wobei die erste Führungskomponente und die zweite Führungskomponente bei einer Anlage-Zwischenstellung von Formteil und Aufnahmebehälter aneinander zur Anlage kommen und sich bei Annäherung von Formteil und Aufnahmebehälter in ihren Längsrichtungen entlang zueinander bewegen und dabei die Abdeckungsvorrichtung von der Freigabestellung in die Abdeckungsstellung bringen.

Nach einer weiteren Ausführungsform dieses Aspekts der Werkzeugvorrichtung ist vorgesehen, dass die zweite Führungsvorrichtung nach einer der beiden folgenden Alternativen gebildet ist:
- die zweite Führungsvorrichtung weist auf: eine zweite Führungsbahn, die als zweite Führungskomponente an der Abdeckungsvorrichtung fixiert ist, und ein an dieser bewegbar geführtes zweites Koppelteil, das an dem Formteil fixiert ist,
- die zweite Führungsvorrichtung weist auf: eine zweite Führungsbahn, die als zweite Führungskomponente an dem Formteil fixiert ist, und ein an dieser bewegbar geführtes zweites Koppelteil, das an der Abdeckungsvorrichtung fixiert ist.

Nach einer weiteren Ausführungsform dieses Aspekts der Werkzeugvorrichtung ist vorgesehen, dass die zweite Führungsvorrichtung aufweist: eine erste Führungskomponente und eine zweite Führungskomponente, die bei einer Bewegung von Formteil und Aufnahmebehälter in ihre geschlossene Stellung in Anlage miteinander sind, dabei entlang ihrer jeweiligen Längsrichtung aneinander geführt sind und die Bewegung von Formteil und der Aufnahmebehälter relativ zueinander in die geschlossene Stellung in eine Bewegung der Abdeckungsvorrichtung in die Abdeckungsstellung umzulenken.

Bei dieser Ausführungsform der Werkzeugvorrichtung kann vorgesehen sein, dass die erste Führungskomponente eine erste äußere Führungs-Oberfläche und die zweite Führungskomponente eine zweite Führungs-Oberfläche aufweist, die an einer an dem Formteil angeordneten und in dem Innenraum S gelegenen Halterung ausgebildet ist, und die erste äußere Führungs-Oberfläche und die zweite Führungskomponente eine zweite Führungs-Oberfläche zwischen der Anlage-Zwischenstellung und der Abdeckungsstellung aneinander gleiten.

Alternativ dazu kann bei einer Ausführungsform der Werkzeugvorrichtung vorgesehen sein, dass die erste Führungskomponente oder die zweite Führungskomponente eine Führungs-Oberfläche und die jeweils andere der Führungskomponenten eine Rollenvorrichtung aufweist und die Führungs-Oberfläche und die Rollenvorrichtung zwischen der Anlage-Zwischenstellung und der Abdeckungsstellung aneinander gleiten.

Nach einer weiteren Ausführungsform dieses weiteren Aspekts der Werkzeugvorrichtung ist vorgesehen, dass die erste Führungsvorrichtung nach einer der folgenden beiden Alternativen gebildet ist:
- die erste Führungsvorrichtung weist auf: eine erste Führungsbahn, die an dem Aufnahmebehälter fixiert ist, und ein an der Abdeckungsvorrichtung fixiertes oder angebrachtes erstes Koppelteil, das sich in einer Führungskopplung mit der ersten Führungsbahn befindet, so dass das erste Koppelteil entlang der ersten Führungsbahn bewegbar ist;
- die erste Führungsvorrichtung weist auf: eine erste Führungsbahn, die an der Abdeckungsvorrichtung fixiert ist, und ein an dem Aufnahmebehälter fixiertes oder angebrachtes erstes Koppelteil, das sich in einer Führungskopplung mit der ersten Führungsbahn befindet, so dass das erste Koppelteil entlang der ersten Führungsbahn bewegbar ist.

Generell kann bei den Ausführungsformen der Werkzeugvorrichtung vorgesehen sein, dass die Abdeckungsvorrichtung einen Basiskörper und einen an diesem bewegbar angeordneten Abdeckungskörper aufweist.

Weiterhin kann bei den Ausführungsformen der Werkzeugvorrichtung vorgesehen sein, dass das Formwerkzeug eine Vorspannvorrichtung aufweist, mit der die Abdeckungsvorrichtung gegen den Basiskörper in die Freigabestellung vorgespannt ist.

Auch kann generell bei den Ausführungsformen der Werkzeugvorrichtung vorgesehen sein, dass die Öffnungs- und Schließvorrichtung
- als Öffnungs- und Schließvorrichtung ausgeführt ist, die eine Öffnungs- und Schließbewegung des Formteils relativ zum Aufnahmebehälter mit einer translatorischen Bewegungskomponente bereitstellt, oder
- als Drehlagerungsvorrichtung ausgeführt ist, die durch Kopplung des Formteils (30) und des Aufnahmebehälters mittels einer Drehlagerungsvorrichtung eine rotatorische Öffnungs- und Schließbewegung des Formteils relativ zum Aufnahmebehälter bereitstellt.

Unter "Bewegungskopplung" zwischen zwei Komponenten wird bei den hierin beschriebenen Ausführungsformen insbesondere jeweils eine Führungsvorrichtung verstanden, die eine mechanische Kopplung der zwei Komponenten und insbesondere eine direkte mechanische Kopplung der zwei Komponenten realisiert, bei der zumindest eine Bewegung einer ersten der zwei Komponenten eine eindeutige Bewegung einer jeweils anderen oder zweiten der zwei Komponenten gegeben ist. Dies schließt nicht aus, dass eine dritte Komponente an die erste oder zweite Komponente auf die beschriebene Art bewegungsgekoppelt ist. Alternativ dazu kann es sich bei der Bewegungskopplung von zwei Komponenten jeweils um die ausschließliche Bewegungskopplung der zwei Komponenten handeln.

Bei den erfindungsgemäßen Ausführungsformen der Werkzeugvorrichtung jeweils vorgesehenen Bewegungskopplungen zweier Komponenten sind die Bewegungen der Komponenten eindeutig miteinander gekoppelt, also voneinander abhängig sind. D.h. eine Bewegung einer ersten Komponente verursacht eineindeutig eine Bewegung einer zweiten Komponente. Das bedeutet auch, dass eine Verschiebung einer ersten Komponente in eine bestimmte Position der ersten Komponente jeweils eine Verschiebung der jeweils zweiten Komponente in nur eine bestimmte Position der zweiten Komponente verursacht. Mit anderen Worten handelt es sich bei der Bewegungskopplung um eine direkte Bewegungskopplung zwischen den beiden Komponenten. Insbesondere kann vorgesehen sein, dass die Bewegungskopplung dann funktioniert, wenn eine der beiden Komponenten bewegt wird, während bei der Bewegung einer zweiten Komponente aus kinematischen Gründen nicht möglich sein muss, insbesondere da es bei zur Klemmung kommt. Die Bewegungskopplung kann jedoch auch derart realisiert sein, dass sowohl bei einer primären also ursächlichen Bewegung der ersten wie auch der zweiten Komponente eine davon abhängige Bewegung der jeweils anderen Komponente verursacht wird.

Die mechanische Bewegungskopplung einzelner oder jeder der bei erfindungsgemäßen Ausführungsformen der Werkzeugvorrichtung als Führungsvorrichtung mit einer Linearführung realisiert sein. Diese ist insbesondere durch eine Führungsbahn einer jeweils ersten der Komponenten und einer an der Führungsbahn geführten Teil der jeweils anderen der Komponenten realisiert sein. Die Führungsbahn kann insbesondere geradlinig oder krummlinig verlaufen. Die Führungsbahn kann insbesondere als Profilschiene ausgeführt sei. Das geführte Teil kann auf der Führungsbahn abrollbare Laufrollen zur reibungsarmen Bewegung des geführten Teils auf der Führungsbahn aufweisen. Das geführte Teil kann auch als auf der Führungsbahn gleitendes Teil ausgeführt sein.

Die jeweilige Führungsvorrichtung zur Bewegungskopplung von jeweiligen zwei Komponenten kann auch ein teleskopisch an einer ersten Komponente aus- und einfachbares Teil und ein insbesondere unmittelbar daran gekoppeltes Kopplungsteil ausgeführt sein, das Teil der jeweils anderen der beiden Komponenten der Führungsvorrichtung ist oder an diese insbesondere unmittelbar gekoppelt ist.

Eine der ersten oder zweiten Führungsvorrichtung kann einen Aktuator aufweisen, mit der die erste oder zweite Komponente, die die jeweilige Führungsvorrichtung koppelt, bewegt werden kann.

Der Ausdruck "entlang" kann hierin im Zusammenhang mit den hierin genannten Richtungsangaben, die den Verlauf einer Konturlinie oder einer Oberfläche betreffen können, oder die eine Richtung einer mechanischen Komponente wie einer Achse oder Welle betreffen können, insbesondere bedeuten, dass die Tangente an die jeweilige Konturlinie oder an die jeweilige Oberfläche in deren Verlauf gemäß der Richtungsangabe bzw. die Längserstreckung und z.B. Mittelachse der mechanischen Komponente lokal mit einem Winkel von maximal 45 Grad und vorzugsweise von maximal 30 Grad von einer Bezugsrichtung oder Bezugsachse abweicht, auf die bzw. der die jeweilige Richtungsangabe bezogen ist.

Der Ausdruck "quer" kann hierin im Zusammenhang mit den hierin genannten Richtungsangaben, die den Verlauf einer Konturlinie oder einer Oberfläche betreffen können, oder die eine Richtung einer mechanischen Komponente wie einer Achse oder Welle betreffen können, insbesondere bedeuten, dass die Tangente an die jeweilige Konturlinie oder an die jeweilige Oberfläche in deren Verlauf gemäß der Richtungsangabe bzw. die Längserstreckung und z.B. Mittelachse der mechanischen Komponente lokal mit einem Winkel von minimal 45 Grad und vorzugsweise von minimal 60 Grad von einer Bezugsrichtung oder Bezugsachse abweicht, auf die bzw. der die jeweilige Richtungsangabe bezogen ist.

Unter dem Begriff "Abstand" insbesondere zwischen zwei Flächen wird hierin insbesondere der kürzeste Abstand verstanden.

Unter einem "kontinuierlichen Verlauf" einer Oberfläche ist gemeint, dass die Oberfläche entlang einer Referenzrichtung gesehen über die gesamte quer zur Referenzrichtung verlaufende Breite keine Ecke aufweist, d.h. differenzierbaren Verlauf hat.

Unter einer Gerichtetheit oder Orientierung einer Oberfläche z.B. durch einen Ausdruck, nach dem eine Oberfläche in eine jeweils angegebene Richtung oder entlang einer jeweils angegebenen Richtung weist, bedeutet hierin insbesondere, dass der Normalenvektor zumindest eines Abschnitts dieser Oberfläche in die jeweils angegebene Richtung bzw. entlang der angegebenen Richtung weist. Diese Definition gilt insbesondere für die lokale Gerichtetheit eines Oberflächenabschnitts, also die Gerichtetheit einer einzelnen, lokalen Stelle des Oberflächenabschnitts. Unter der Gerichtetheit oder Orientierung eines Oberflächenabschnitts insgesamt wird insbesondere verstanden, dass die Orientierung des Oberflächenabschnitts zumindest in einem mittleren Bereich des jeweiligen Oberflächenabschnitts die jeweilige Gerichtetheit oder Orientierung hat. Der mittlere Bereich des Oberflächenabschnitts kann dabei insbesondere als ein kreisförmiger Bereich um den Flächenschwerpunkt des Oberflächenabschnitts als Zentrum desselben definiert sein, wobei der kreisförmige Bereich den halben Flächenbetrag hat wie der Oberflächenabschnitt.

Unter einem Verlauf einer Oberfläche insbesondere im Vergleich zu einer anderen Komponente oder Richtung wird hierin die Richtung einer Tangente an eine jeweiligen Stelle der Oberfläche verstanden, wobei die Richtung der Tangente in Relation zu einer anderen Tangente an einen anderen Oberflächenstelle zu nehmen ist.

Die Längsrichtung einer strukturellen Komponente und insbesondere einer Führungsbahn ergibt sich als Verbindungslinie der Flächenschwerpunkte der jeweils kleinsten Querschnittsflächen. Da die strukturellen Komponente und insbesondere einer Führungsbahn geradlinig oder zumindest abschnittsweise gekrümmt verlaufen kann, ist die Längsrichtung generell als lokale Längsrichtung zu verstehen.

Unter "Bewegungskoppeln" wird ein Koppeln von Bewegungen zweiter Komponenten miteinander verstanden, wobei darunter ein direktes Koppeln oder auch ein Koppeln mit einem Getriebe oder einer Übersetzung zwischen den zwei Komponenten verstanden werden kann.

Im Folgenden werden Ausführungsformen der erfindungsgemäßen Werkzeugvorrichtung mit einem Formteil, einem Aufnahmebehälter, einer Abdeckungsvorrichtung zur Abdeckung eines Abdeckungsabschnitts, sowie einer ersten und einer zweiten Führungsvorrichtung zur Bewegung der Abdeckungsvorrichtung an Hand der beiliegenden Figuren beschrieben, die zeigen:
- Figur 1 eine Schnittdarstellung einer Ausführungsform der erfindungsgemäßen Werkzeugvorrichtung in einem geschlossenen Zustand,
- Figur 2 die Ausführungsform der in der Figur 1 dargestellten Werkzeugvorrichtung in der Schnittdarstellung in einem offenen Zustand,
- Figur 3 eine vergrößerte Detailansicht eines Ausschnitts A der Figur 1,
- Figur 4 eine Schnittdarstellung einer weiteren Ausführungsform der erfindungsgemäßen Werkzeugvorrichtung in einem geschlossenen Zustand,
- Figur 5 die Ausführungsform der in der Figur 4 dargestellten Werkzeugvorrichtung in der Schnittdarstellung in einem offenen Zustand,
- Figur 6 eine Schnittdarstellung einer weiteren Ausführungsform der erfindungsgemäßen Werkzeugvorrichtung in einem geschlossenen Zustand,
- Figur 7 eine Schnittdarstellung einer weiteren Ausführungsform der erfindungsgemäßen Werkzeugvorrichtung in einem geschlossenen Zustand,
- Figur 8 die Ausführungsform der in der Figur 7 dargestellten Werkzeugvorrichtung in der Schnittdarstellung in einem offenen Zustand,
- Figur 9 eine Schnittdarstellung einer weiteren Ausführungsform der erfindungsgemäßen Werkzeugvorrichtung in einem geschlossenen Zustand,
- Figur 10 die Ausführungsform der in der Figur 9 dargestellten Werkzeugvorrichtung in der Schnittdarstellung in einem offenen Zustand,
- Figur 11 eine perspektivische Darstellung der Abdeckungsvorrichtung, einer ersten Führungsvorrichtung, der zweiten Führungsvorrichtung und der Betätigungsvorrichtung einer weiteren Ausführungsform der erfindungsgemäßen Werkzeugvorrichtung,
- Figur 12 die Kombination der Komponenten der Ausführungsform der in der Figur 11 dargestellten Werkzeugvorrichtung in einer Schnittdarstellung,
- Figur 13 eine Schnittdarstellung der Abdeckungsvorrichtung, einer ersten Führungskomponente, der zweiten Führungskomponente und einer Betätigungsvorrichtung einer weiteren Ausführungsform der erfindungsgemäßen Werkzeugvorrichtung,
- Figur 14 eine Schnittdarstellung von zwei Abdeckungsvorrichtungen, einer ersten Führungskomponente, der zweiten Führungskomponente und einer Betätigungsvorrichtung einer weiteren Ausführungsform der erfindungsgemäßen Werkzeugvorrichtung,
- Figur 15 die Ausführungsform der in der Figur 14 dargestellten Werkzeugvorrichtung als perspektivische Darstellung,
- Figur 16 eine Schnittdarstellung einer weiteren Ausführungsform des erfindungsgemäßen Herstellungswerkzeugs in einem offenen Zustand,
- Figur 17 ein Beispiel eines Kunststoff-Hautstücks, das mit einer Werkzeugvorrichtung nach der Erfindung herstellbar ist.

Die erfindungsgemäße Vorrichtung oder die erfindungsgemäße Werkzeugvorrichtung 10 betrifft eine Vorrichtung zur Herstellung eines Kunststoff-Hautstücks H oder einer Slushhaut mit zumindest einer Ausnehmung H1, H2 im Inneren oder am Rand des Kunststoff-Hautstücks H. Das Kunststoff-Hautstücks H kann insbesondere als Dekorschicht zur Herstellung eines Verkleidungsteils mit der Dekorschicht verwendet werden. Dabei ist das Verkleidungsteil aus einem Trägerteil und dem dieses beschichtenden Hautstück H gebildet. Beispielsweise wird das Verkleidungsteil dadurch hergestellt, dass das Hautstück H auf eine Oberfläche des Trägerteiles aufgebracht wird oder dass das Hautstück H mit einem härtbaren Material zur Bildung eines Trägerteils hinterschäumt wird.

Bei dem herzustellenden Verkleidungsteil kann es sich beispielsweise um eine Armauflagen-Verkleidung oder eine Instrumententafel für den Innenraum eines Fahrzeugs handeln.

Die Werkzeugvorrichtung 10 zur Herstellung eines Kunststoff-Hautstücks H weist auf:
- ein Formwerkzeug 20, das aus einem Formteil 30 mit einer Formteil-Innenfläche 30a, einem eine Innenfläche 42aufweisenden Aufnahmebehälter 40 und einer Öffnungs- und Schließvorrichtung 70 gebildet ist, mit der das Formteil 30 und der Aufnahmebehälter 40 relativ zueinander zwischen einer geschlossenen und einer offenen Stellung bewegbar sind,
- zumindest eine Abdeckungsvorrichtung 50 mit einer Abdeckungsoberfläche 50a zur Erzeugung jeweils zumindest einer Ausnehmung H1 in dem Kunststoff-Hautstück H und
- eine Führungsanordnung F, mit der die Abdeckungsvorrichtung 50 zwischen einer Abdeckungsstellung, bei der die Abdeckungsoberfläche 50a einen Abdeckungsabschnitt 31 der Formteil-Innenfläche 30a abdeckt, und einer Freigabestellung, bei der die Abdeckungsoberfläche 50a von der Formteil-Innenfläche 30a abgesetzt ist, wobei die Bewegung zwischen der Abdeckungsst-ellung und der Freigabestellung mechanisch mit der Bewegung des Formteils 30 relativ zum Aufnahmebehälter 40 gekoppelt ist.

Die einander zugewandten Flächen 30a, 42 des Formteils 30 und des Aufnahmebehälters 40 bilden einen Innenraum S des Formwerkzeugs 20.Bei dem Abdecken eines Abdeckungsabschnitts 31 der Formteil-Innenfläche 30a durch die Abdeckungsoberfläche 50a zur Herstellung einer Ausnehmung H1 liegt zumindest ein Randabschnitt der Abdeckungsvorrichtung 50 an der Formteil-Innenfläche 30a an. Auch kann vorgesehen sein, dass die Gestalt des Abdeckungsabschnitts 31 und die Gestalt der Abdeckungsoberfläche 50a komplementär zueinander sind, so dass in der Abdeckungsstellung der Abdeckungsabschnitt 31 und die Abdeckungsoberfläche 50a flächig aneinander anliegen. Unter dem Begriff "Gestalt" wird in diesem Zusammenhang der räumliche Verlauf des Abdeckungsabschnitts 31 bzw. der Abdeckungsoberfläche 50a verstanden.

Die Werkzeugvorrichtung 10 kann eine Anschlussvorrichtung 60 aufweisen, mit der das Formwerkzeug 20 an einer Drehlagerungsvorrichtung ankoppelbar ist, um das Formwerkzeug 20 um eine Drehachse D drehbar zwischen einer Ausgangsstellung und einer Pulveranlagerungsstellung zu lagern. Die Werkzeugvorrichtung 10 kann auch einen Drehmotor aufweisen, der mechanisch, z.B. über eine Antriebsachse mit der Anschlussvorrichtung 60 gekoppelt ist, um das Formwerkzeug 20 in Drehung zu versetzen.

Das Formteil 30 kann schalenförmig, also als Slush-Schale ausgeführt sein. Das Formteil 30 weist eine Formteil-Innenfläche 30a auf, die aus zumindest einem Abdeckungsabschnitt 31 und dem Formungskontur-Oberflächenabschnitt 32 gebildet ist. Der Abdeckungsabschnitt 31 ist durch die Abdeckungsstellung einer jeweiligen zumindest einen Abdeckungsvorrichtung 50 definiert, da in der Abdeckungsstellung eine Abdeckungsoberfläche 50a einerjeweiligen Abdeckungsvorrichtung 50 einen Abdeckungsabschnitt 31 der Formteil-Innenfläche 30a abdeckt. Nach einer Ausführungsform kann in der Abdeckungsstellung einer jeweiligen Abdeckungsvorrichtung 50 die jeweilige Abdeckungsoberfläche 50a flächig an dem Abdeckungsabschnitt 31 der Formteil-Innenfläche 30a anliegen. Alternativ dazu kann vorgesehen sein, dass die jeweilige Abdeckungsoberfläche 50a eine umlaufende Erhebung aufweist, so dass in der Arbeitsstellung der Abdeckungsvorrichtung 50 die umlaufende Erhebung auf der Formteil-Innenfläche 30a aufliegt und dabei den Abdeckungsabschnitt 31 begrenzt sowie abdeckt.

Der Formungskontur-Oberflächenabschnitt 32 ist dazu vorgesehen, dass sich an ihr das herzustellende Hautstück H aus geschmolzenem Material zur Bildung des Hautstücks H ausbildet. Durch das Abdecken des Abdeckungsabschnitts 31 der Formteil-Innenfläche 30a durch die Abdeckungsoberfläche 50a kann sich kein Material zur Bildung des Hautstücks H an dem Abdeckungsabschnitts 31 anlagern, so dass das Hautstück H im Bereich des Formungskontur-Oberflächenabschnitts 32 entsteht, nicht aber im Bereich des Abdeckungsabschnitts 31, in dem das entstandene Hautstück H eine Öffnung oder Ausnehmung H1 aufweist.

Zur Herstellung des Kunststoff-Hautstücks H oder der Slush-Haut wird das Formteil 30 auf eine Temperatur erhitzt, die über der Schmelztemperatur des Materials M liegt, so dass das Material M, das an der Formteil-Innenfläche 30a gelegen ist, an dieser schmilzt. Als Ausgangsmaterial für die Dekorhaut H aus einem thermoplastischen Material, z.B. Polyvinylchlorid (PVC), Polyurethan (TPU) gebildet sein oder bestehen. Das Material zur Bildung des Hautstücks H kann insbesondere Pulvermaterial sein. Beispielsweise kann das Material M aus einem TPU-Pulver bestehen oder aus diesem gebildet sein. Bei der Ausführungsform der Werkzeugvorrichtung 10 mit einer Anschlussvorrichtung 60 zur Drehlagerung des Formwerkzeugs 20 an einer Drehlagerungsvorrichtung befindet sich das Formwerkzeug 20 zunächst in einer Ausgangs-Drehstellung, bei der der Aufnahmebehälter 40 in Bezug auf die Schwerkraftrichtung unterhalb des Formteils 30 gelegen ist, und ist Material M zur Bildung des Hautstücks H im Aufnahmebehälter 40 gelegen. In dieser Ausgangs-Drehstellung befinden sich Formteil 30 und Aufnahmebehälter 40 relativ zueinander in einer geschlossenen Stellung, bei der das Formteil 30 und der Aufnahmebehälter 40 aneinander anliegen und einen Werkzeug-Innenraum S begrenzen und bei der die Abdeckungsoberfläche 50a der von der Führungsanordnung F geführten Abdeckungsvorrichtung 50 einen Abdeckungsabschnitt 31 der Formteil-Innenfläche 30a abdeckt. Unter der Bezeichnung "unterhalb" wird in diesem Zusammenhang insbesondere verstanden, dass mindestens 50% der Struktur des Aufnahmebehälters 40 unterhalb des Formwerkzeugs 20 gelegen ist. In den Figuren ist ein am Aufnahmebehälter 40 körperfestes Koordinatensystem mit den Koordinatenachsen X, Y, Z eingesetzt, wobei das Koordinatensystem derart definiert ist, dass die X-Achse in Richtung der Drehachse D gerichtet ist, die Y-Achse entgegen der Schwerkraftrichtung verläuft, wenn sich das Formwerkzeug 20 in seiner Ausgangsstellung befindet. Dabei kann die Y-Achse als Formwerkzeug-Hochachse insbesondere derart definiert sein, dass diese auf der ebenen Oberfläche M1 von in dem Aufnahmebehälter 40 befindlichem pulverförmigen Material M senkrecht steht, wenn dieses den Aufnahmebehälter 40 zur Hälfte anfüllt und sich der Aufnahmebehälter 40 in einer Drehstellung befindet, in der die Oberfläche des pulverförmigen Materials M eine minimale Oberfläche hat.

Anschließend wird die Werkzeugvorrichtung 10 mit dem Formwerkzeug 20 in eine Drehstellung gedreht, in der das Formwerkzeug 20 in Bezug auf die Schwerkraftrichtung oberhalb des Aufnahmebehälters 40 gelegen und die Y-Richtung in Schwerkraftrichtung gerichtet ist, so dass sich Material M zur Bildung des Hautstücks H an den Formungskontur-Oberflächenabschnitt 32 des Formteils 30, also an den Oberflächenbereich des Formteils 30 anlagert, der außerhalb des von der Abdeckungsoberfläche 50a bedeckten Abdeckungsabschnitts 31 gelegen ist. Das Material M wird abgekühlt oder kühlt sich nach einer vorgegebenen Mindestzeit ab, so dass nach der Abkühlung als Hautstück H der Formschale oder dem Formteil 30 entnehmbar ist. Die Formungskontur-Oberflächenabschnitt 32 des Formteils 30 ist derart gestaltet, dass das mit diesem hergestellte Hautstück H eine vorbestimmte dreidimensionale, also dreidimensional zu beschreibende Gestalt hat, mit der das Hautstück H in vorteilhafterweise, insbesondere ohne Verzerrungen in ihrer flächigen Erstreckung oder ohne Falten, auf das Trägerteil kaschiert werden kann.

Mittels der Führungsanordnung F ist eine mechanische Kopplung der Relativbewegung zwischen dem Formteil 30 und dem Aufnahmebehälter 40 und der Bewegung der Abdeckungsoberfläche 50a der Abdeckungsvorrichtung 50 zwischen der Abdeckungsstellung und der Freigabestellung relativ zur Formteil-Innenfläche 30a eingerichtet. Dabei nimmt die Abdeckungsoberfläche 50a die Abdeckungsstellung ein, wenn ein Randabschnitt 35 des Formteils 30 und ein Randabschnitt 45 des Aufnahmebehälters 40 mittels der Öffnungs- und Schließvorrichtung 70, einen Verbindungsabschnitt bildend, aneinander zur Anlage gebracht sind, und nimmt die Abdeckungsoberfläche 50a die Freigabestellung ein, wenn der Randabschnitt 35 des Formteils 30 und der Randabschnitt 45 des Aufnahmebehälters 40 mit einem Mindestabstand voneinander entfernt liegen.

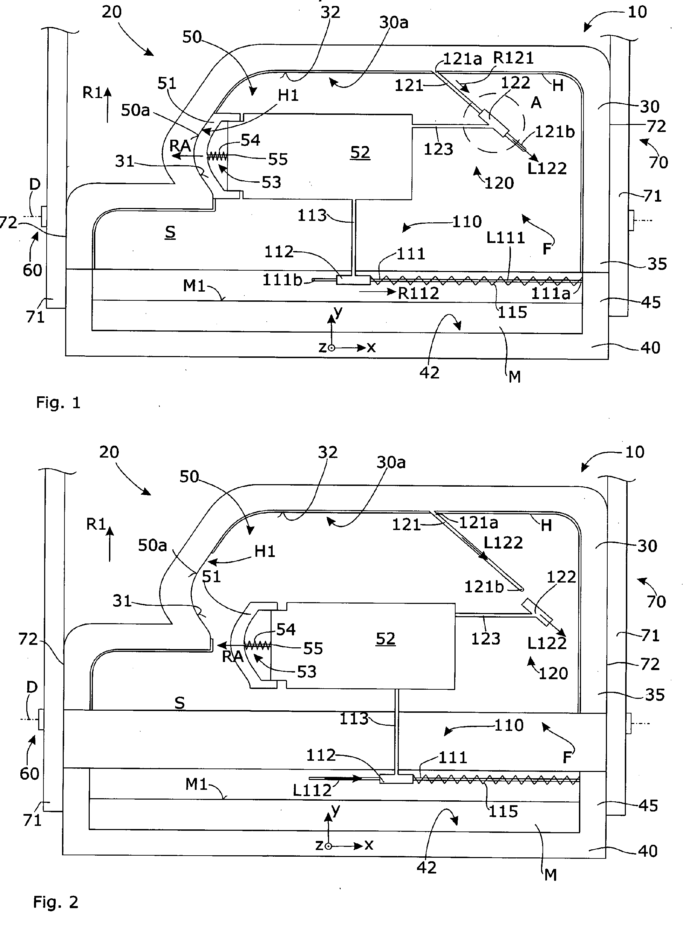

Die Öffnungs- und Schließvorrichtung 70 kann, wie es bei der Ausführungsform nach der Figur 1 der Fall ist, derart ausgeführt sein, dass die Bewegung des Formteils 30 relativ zum Aufnahmebehälter 40 einen translatorischen Bewegungsanteil hat, also kurvenförmig und insbesondere geradlinig verläuft. Der Bewegungsanteil kann insbesondere eine Bewegungskomponente in Y-Richtung haben. Hierzu weist die Öffnungs- und Schließvorrichtung 70 zumindest eine an dem Aufnahmebehälter 40 angebrachte Führungsbahn 71 oder zumindest zwei an dem Aufnahmebehälter 40 angebrachte Führungsbahnen 71 auf. Bei der Realisierung mit zumindest zwei Führungsbahnen 71 können diese an einander entgegen gesetzt zueinander gelegenen Seitenabschnitten des Formwerkzeugs 20 angeordnet sein und zumindest zwei Führungsbahn-Anlageabschnitte 72 aufweisen, die an dem Formteil 30 ausgebildet und an zwei entgegen gesetzt zueinander gelegenen Seiten des Formteils 30 derart gelegen sind, dass jede in jeweils eine der Führungsbahnen 71 eingreift, so dass das Formteil 30 entlang der Führungsbahnen 71 und durch diese geführt relativ zum Aufnahmebehälter 40 bewegbar sind. Nach einer weiteren Ausführungsform sind mehr als zwei Führungsbahnen 71 und Führungsbahn-Anlageabschnitte 72, von denen jeder in jeweils eine Führungsbahnen 71 eingreift, über den Umfang des Formwerkzeugs 20 regelmäßig oder unregelmäßig verteilt angeordnet. Die Öffnungs- und Schließvorrichtung 70 kann auch in anderer Weise ausgeführt sein. Insbesondere kann die Öffnungs- und Schließvorrichtung 70 eine Zentrierungsbuchse aufweisen. Beispielsweise können die Führungsbahnen 71 seitlich an dem Formwerkzeugs 20 angebracht und die Führungsbahn-Anlageabschnitte 72 am Aufnahmebehälter 40 ausgebildet sein.

Die Figuren 1 bis 2 zeigen eine erste Ausführungsform der erfindungsgemäßen Werkzeugvorrichtung 10 zur Herstellung von Kunststoffhäuten H mit zumindest einer Ausnehmung H1. Die Werkzeugvorrichtung 10 weist auf: das Formwerkzeug 20 mit dem Formteil 30, dem Aufnahmebehälter 40, der Abdeckungsvorrichtung 50 und der Führungsanordnung F.

Die Abdeckungsvorrichtung 50 weist bei der gezeigten Ausführungsform ein Abdeckteil 51 mit der Abdeckungsoberfläche 50a zum Abdecken eines Abdeckungsabschnitts 31 der Formteil-Innenfläche 30a und zur Herstellung einer Ausnehmung H1, einen Basiskörper 52, eine Vorspannvorrichtung 53 auf, die das Abdeckteil 51 und den Basiskörper 52 miteinander koppelt und dabei das Abdeckteil 51 relativ zum Basiskörper 52 in eine ausgefahrene Stellung vorspannt, wobei das Abdeckteil 51 an den Basiskörper 52 gegen die von der Vorspannvorrichtung 53 bereitgestellte Vorspannkraft in eine eingefahrene Stellung in einer Andrück-Bewegungsrichtung RA andrückbar ist. Insbesondere kann vorgesehen sein, dass die Andrück-Bewegungsrichtung RA entlang einer Flächennormalen des Abdeckungsabschnitts 31 verläuft. Dazu kann die Vorspannvorrichtung 53 eine Feder oder mehrere Federn aufweisen oder eine Feder oder mehrere Federn oder eine andere Komponente sein, die gegen die Andrück-Bewegungsrichtung RA zusammendrückbar ist. Die Vorspannvorrichtung 53 kann als pneumatische Feder wie z.B. ein Pneumatikzylinder ausgeführt sein. Alternativ dazu kann die Vorspannvorrichtung 53, wie es in der Figur 1 dargestellt ist, aus einer Spiralfeder 54 und optional einem Führungsstift 55 gebildet sein, der die Spiralfeder umläuft und an dem die Spiralfeder längs ihres Verlaufs zumindest abschnittsweise anliegen kann. Der Führungsstift 55 kann an dem Abdeckteil 51 oder dem Basiskörper 52 angebracht sein und sich in Andrück-Bewegungsrichtung RA des Abdeckteils 51 relativ zum Basiskörper 52 erstrecken. Bei der Ausführungsform der Vorspannvorrichtung 53 mit oder ohne einem Führungsstift 55 kann die Vorspannvorrichtung 53 z.B. mit einem jeweiligen Ende an einem oder beiden der folgenden Teile fixiert sein:
(a) an dem Abdeckteil 51,
(b) an dem Basiskörper 52.

Generell, also bei den Ausführungsformen nach der Erfindung kann die Abdeckungsvorrichtung 50 aus dem Abdeckteil 51 und ohne einem Basiskörper 52, an der das Abdeckteil 51 an dem Basiskörper 52 gegenüber diesem bewegbar oder nicht bewegbar angeordnet ist, gebildet sein. Insbesondere kann generell hierin das Abdeckteil einer Abdeckungsvorrichtung an diesem bewegungsfest fixiert oder an diesem gegenüber diesem bewegbar gekoppelt sein.

Die Führungsanordnung F weist generell eine erste Führungsvorrichtung und eine zweite Führungsvorrichtung auf. Die erste Führungsvorrichtung hat die Funktion, die Bewegung der Abdeckungsvorrichtung 50 oder des Abdeckteils 51 relativ zu dem Abdeckungsabschnitt 31 zwischen einer Ausgangsstellung und einer Pulveranlagerungsstellung zu führen. Die zweite Führungsvorrichtung hat die Funktion, die Öffnungs- oder Schließbewegung der Öffnungs- und Schließvorrichtung 70 auf die Abdeckungsvorrichtung 50 derart zu übertragen, dass die Abdeckungsvorrichtung 50 entlang der ersten Führungsbahn bewegt und hierzu angetrieben wird. Die zweite Führungsvorrichtung ist deshalb Stellvorrichtung für die Bewegung der Abdeckungsvorrichtung 50.

Bei der Ausführungsform der Figur 1 weist die erste Führungsvorrichtung 110 auf: eine erste Führungsbahn 111, die mit einem ersten Ende 111 a an dem Aufnahmebehälter 40 fixiert oder angebracht ist, und ein an der Abdeckungsvorrichtung 50 fixiertes oder angebrachtes erstes Koppelteil 112, das sich in einer Führungskopplung mit der sich in einer Längsrichtung 122 erstreckenden ersten Führungsbahn 111 befindet, so dass das erste Koppelteil 112 entlang der ersten Führungsbahn 111 in oder entgegen einer Richtung R112 bewegbar ist. Die erste Führungsbahn 111 weist ein zweites Ende 111 b auf, das entgegen gesetzt zu dem ersten Ende 111 a gelegen ist und in den Innenraum S hineinragt. Bei der Ausführungsform der Figur 1 ist die erste Führungsbahn 111 mit seinem ersten Ende 111 a an einer Seite des Aufnahmebehälters 40 angebracht, die - quer zur Längsrichtung L111 der ersten Führungsbahn 111 gesehen - dem Abdeckungsabschnitt 31 gegenüber liegt. Alternativ dazu kann die erste Führungsbahn 111 auch auf derselben Seite wie der Abdeckungsabschnitt 31 an dem Aufnahmebehälter 40 gelegen sein. Die erste Führungsvorrichtung 110 ist derart ausgeführt, dass eine Führung der Bewegung des ersten Koppelteils 112 an der ersten Führungsbahn 111 gegeben ist. Die erste Führungsbahn 111 stellt eine Linearführung bereit.

Die erste Führungsvorrichtung 110 kann auch auf andere Weise, beispielsweise als Schienenführung, als Rollführung oder als Gleitführung ausgeführt sein.

An das erste Koppelteil 112 können auch mehrere Abdeckungsvorrichtungen 50 befestigt sein, die in Bezug auf die Draufsicht auf die Formteil-Innenfläche 30a nebeneinander gelegen sind, so dass durch jede Abdeckungsvorrichtung 50 jeweils eine Ausnehmung H1 erzeugt werden kann.

Alternativ dazu kann vorgesehen sein, dass die Werkzeugvorrichtung 10 für jede der Abdeckungsvorrichtungen 50 eine erfindungsgemäß vorgesehene Kombination einer ersten Führungsvorrichtung 110 und einer zweiten Führungsvorrichtung 120 aufweist, so dass an eine erste Führungsvorrichtung 110 und eine zweite Führungsvorrichtung 120 mehrere Abdeckungsvorrichtungen 50 gekoppelt sind.

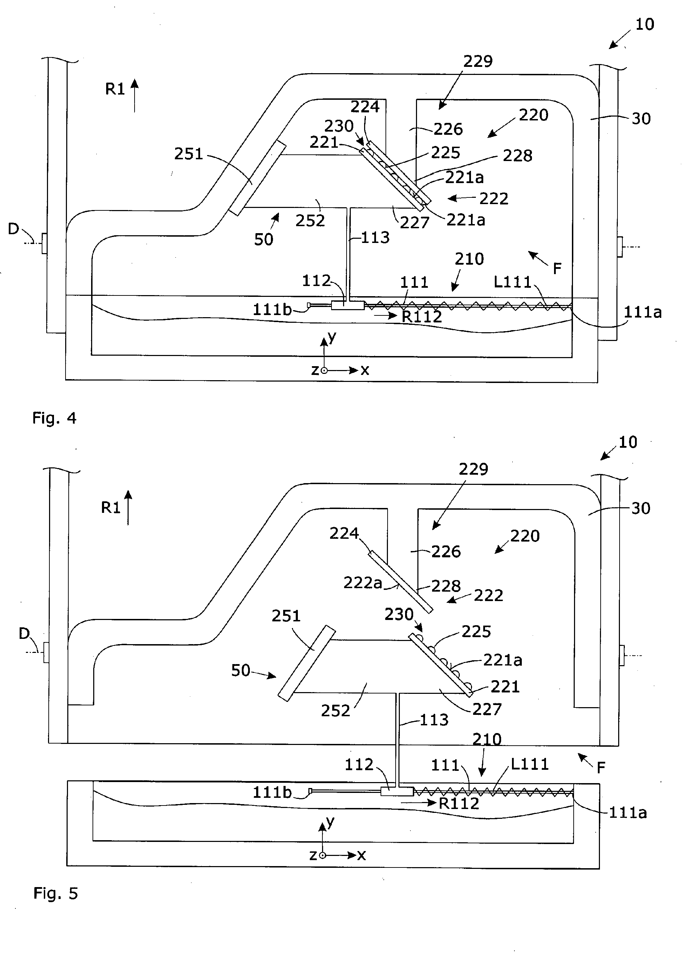

Bei der Ausführungsform der Abdeckungsvorrichtung 50 mit einem Basiskörper 52 und einem an diesem bewegbar angeordneten Abdeckungskörper 51 kann das erste Koppelteil 112 an dem Basiskörper 52 fixiert oder angebracht sein. Umgekehrt kann auch vorgesehen sein, dass die erste Führungsbahn 111 an der Abdeckungsvorrichtung 50 und gegebenenfalls dessen Basiskörper 52 fixiert ist und dass das erste Koppelteil 112 an dem Aufnahmebehälter 40 fixiert ist. Das erste Koppelteil 112 kann über eine Verbindungsvorrichtung 113 beispielsweise in Form eines Haltearms an der Abdeckungsvorrichtung 50 bzw., wie es in der Figur 4 dargestellt ist, an einem Basiskörper 52 desselben angebracht sein.

In genereller Hinsicht der Erfindung kann, wie auch der Figur 1 entnehmbar ist, insbesondere vorgesehen sein, dass die Orientierung des Abdeckungsabschnitts 31 zumindest in einem mittleren Bereich desselben entlang der Drehachse D verläuft und dabei auch die erste Führungsbahn, also insbesondere die erste Führungsbahn 111, entlang der Drehachse D verlaufen. Der mittlere Bereich des Abdeckungsabschnitts 31 kann dabei insbesondere als ein kreisförmiger Bereich um den Flächenschwerpunkt des Abdeckungsabschnitts 31 als Zentrum desselben definiert sein, wobei der kreisförmige Bereich den halben Flächenbetrag hat wie der Abdeckungsabschnitt 31. Dieser Aspekt kann bei anderen Ausführungsformen der Werkzeugvorrichtung 10 nach der Erfindung realisiert sein.

Das Formwerkzeug 20 kann eine Vorspannvorrichtung 115 aufweisen, mit der die Abdeckungsvorrichtung 50 in die Freigabestellung vorgespannt ist. Dabei kann gemäß der Ausführungsform der Figur 1 die Vorspannvorrichtung 115 als Zugfeder ausgeführt sein und mit einem ersten Ende an dem ersten Koppelteil 112 und mit einem zweiten Ende an der ersten Führungsbahn 111 oder an dem Aufnahmebehälter 40 befestigt sein.

Bei der Ausführungsform der Figur 1 weist die zweite Führungsvorrichtung 120 auf: eine erste Führungskomponente derselben oder sich in einer Längsrichtung L122 ersteckende zweite Führungsbahn 121, die an dem Formteil 30 fixiert oder angebracht ist, und ein an der Abdeckungsvorrichtung 50 fixiertes oder angebrachtes zweites Koppelteil 122, das sich in einer Führungskopplung mit der zweiten Führungsbahn 121 befindet, so dass das zweite Koppelteil 122 entlang der zweiten Führungsbahn 121 bewegbar ist. Das zweite Koppelteil 122 kann generell als zweite Führungskomponente verstanden werden. Die zweite Führungsvorrichtung 120 ist derart ausgeführt, dass eine Führung der Bewegung des zweiten Koppelteils 122 an der zweiten Führungsbahn 121 gegeben ist. Dabei bildet eine innere Oberfläche 122a des zweiten Koppelteils 122 eine innere Bohrung oder eine seitliche, sich in Längsrichtung der zweiten Führungsbahn 121 über das Koppelteil 122 offene Vertiefung aus. Bei der dargestellten Ausführungsform ist die zweite Führungsbahn 121 mit einem ersten Ende 121 a an dem Formteil 30 angebracht und weist ein freies Ende 121 b auf, das entgegen gesetzt zu dem ersten Ende 122a gelegen ist. Weiterhin weist das zweite Koppelteil 122 ein dem ersten Ende 121 a der zweiten Führungsbahn 121 zugewandtes erstes Ende 122a und ein zweites Ende 122b auf, das entgegen gesetzt zu dem ersten Ende 122a gelegen ist.

Die zweite Führungsvorrichtung 120 kann auch auf andere Weise, beispielsweise als Schienenführung, als Rollführung oder als Gleitführung ausgeführt sein.

Bei der Ausführungsform der Abdeckungsvorrichtung 50 mit einem Basiskörper 52 und einem an diesem bewegbar angeordneten Abdeckungskörper 51 kann das zweite Koppelteil 122 an dem Basiskörper 52 fixiert oder angebracht sein. Umgekehrt kann auch vorgesehen sein, dass die zweite Führungsbahn 121 an der Abdeckungsvorrichtung 50 und gegebenenfalls an dem Basisteil 52 fixiert oder angebracht ist und dass das zweite Koppelteil 122 an dem Formteil 30 fixiert oder angebracht ist.

Die zweite Führungsbahn 121 erstreckt sich in einer Längsrichtung L121, die sich als Verbindungslinie der Flächenschwerpunkte der jeweils kleinsten Querschnittsflächen der Führungsbahn 121 ergibt. Da die zweite Führungsbahn 121 geradlinig oder zumindest abschnittsweise gekrümmt verlaufen kann, ist die Längsrichtung L121 generell als lokale Längsrichtung zu verstehen. Vorzugsweise verläuft die generell lokale Längsrichtung R121 der zweiten Führungsbahn 121 in einem Winkelbereich bis zu 70 Grad und insbesondere zwischen ± 5 Grad und ±70 Grad zur der Y-Achse oder Formwerkzeug-Hochachse. Insbesondere kann auch vorgesehen sein, dass die Orientierung der zweiten Führungsbahn 121 insgesamt in einem Winkelbereich zwischen 20 Grad und 85 Grad und insbesondere zwischen 30 Grad und 60 Grad zur Richtung der ersten Führungsbahn 111 verläuft.

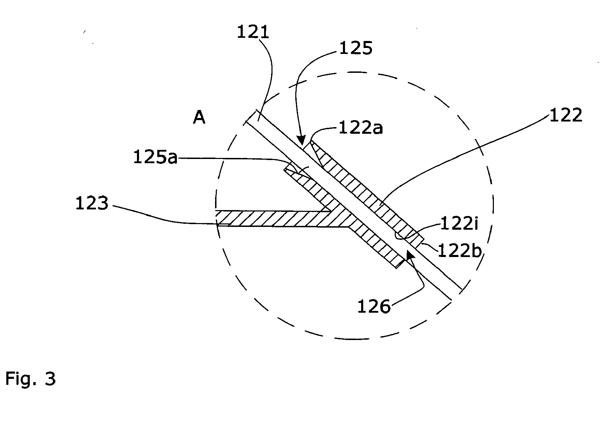

Die zweite Führungsbahn 121 kann derart ausgeführt sein, dass in der Freigabestellung der Abdeckungsvorrichtung 50 das zweite Koppelteil 122 über das freie Ende 122b hinaus bewegt ist und sich im entkoppelten Zustand befindet. Die Figur 3 zeigt das Zusammenwirken des zweiten Koppelteils 122 mit der zweiten Führungsbahn 121. Um aus dem entkoppelten Zustand ein Einkoppeln des zweiten Koppelteils 122 in die durch die innere Oberfläche 122i definierte Bohrung oder Vertiefung 126 sicherzustellen, bildet die innere Oberfläche 122i am ersten Ende 122a eine trichterförmige Verbreiterung 125a der Bohrung oder Vertiefung 126 aus, wobei die Verbreiterung in Richtung zum ersten Ende 122a gegeben ist (Figur 3).

Die Ausführungsform der Figur 4 zeigt eine weitere Ausführungsform der Abdeckungsvorrichtung 50, die aus dem Abdeckteil 251 und dem Basiskörper 252 gebildet ist, wobei das Abdeckteil 251 an dem Basiskörper 252 gegenüber diesem nicht bewegbar angeordnet ist, gebildet ist. Die Abdeckungsvorrichtung 50 kann auch auf andere Weise und insbesondere auf eine hierin beschriebene Weise ausgeführt sein.

Die erste Führungsvorrichtung 110 der Ausführungsform der Figur 4 ist wie die erste Führungsvorrichtung der Figur 1 ausgeführt und weist insbesondere die erste Führungsbahn 111, die mit einem ersten Ende 111 a an dem Aufnahmebehälter 40 fixiert oder angebracht ist, und das an der Abdeckungsvorrichtung 50 fixierte oder angebrachte erste Koppelteil 112 auf, das sich in einer Führungskopplung mit der ersten Führungsbahn 111 befindet, so dass das erste Koppelteil 112 entlang der ersten Führungsbahn 111 bewegbar ist. Die erste Führungsbahn 111 weist ein zweites Ende 111 b auf, das entgegen gesetzt zu dem ersten Ende 111a gelegen ist und in den Innenraum S hineinragt. Die erste Führungsvorrichtung 110 ist derart ausgeführt, dass eine Führung der Bewegung des ersten Koppelteils 112 an der ersten Führungsbahn 111 in oder entgegen der Richtung R112 gegeben ist. Die erste Führungsvorrichtung 110 kann auch in hierzu beschriebenen Varianten ausgeführt sein.

Das erste Koppelteil 112 kann über eine Verbindungsvorrichtung 113 beispielsweise in Form eines Haltearms an der Abdeckungsvorrichtung 50 oder, wie es in der Figur 4 dargestellt ist, einem Basiskörper 252 desselben angebracht sein.

Die zweite Führungsvorrichtung 220 weist auf: eine erste Führungskomponente 221 und eine zweite Führungskomponente 222, die bei einer Bewegung von Formteil 30 und Aufnahmebehälter 40 in ihre geschlossene Stellung in Anlage miteinander sind, dabei entlang ihrer jeweiligen Längsrichtung aneinander geführt sind und die Bewegung von Formteil 30 und der Aufnahmebehälter 40 relativ zueinander in die geschlossene Stellung in eine Bewegung der Abdeckungsvorrichtung 50 in die Abdeckungsstellung umzulenken.

Dabei kann die zweite Führungsvorrichtung 220 insbesondere gemäß der Figur 4 wie folgt ausgeführt sein: An der Abdeckungsvorrichtung 50 ist eine erste Führungskomponente 221 angeordnet, die eine erste, insbesondere planare äußere Führungs-Oberfläche 221 a aufweist. Der Ausdruck "planar" bedeutet in diesem Zusammenhang, dass die Fläche zumindest in dem für die Führungsfunktion relevanten Bereich ungekrümmt ist. Insbesondere kann vorgesehen sein, dass die Orientierung der ersten Führungs-Oberfläche 221 a insgesamt in einem Winkelbereich zwischen 20 Grad und 85 Grad und insbesondere zwischen 30 Grad und 60 Grad zur Richtung der ersten Führungsbahn 111 verläuft. Bei einer gekrümmten ersten Führungsbahn 111 kann insbesondere vorgesehen sein, dass die Orientierung der ersten Führungs-Oberfläche 221 a insgesamt in einem Winkelbereich zwischen 20 Grad und 80 Grad und insbesondere zwischen 30 Grad und 60 Grad zu den lokalen Richtungen der ersten Führungsbahn 111 verläuft. Die erste Führungskomponente 221 kann dabei die erste Führungs-Oberfläche 221 a selbst sein oder ein Endabschnitt 227 der Abdeckungsvorrichtung 50 mit der ersten Führungs-Oberfläche 221 a, die bzw. der entgegen gesetzt zu demjenigen Ende der Abdeckungsvorrichtung 50 gelegen ist, an dem das Abdeckteil 251 gelegen ist. Die erste Führungskomponente 221 kann auch, wie es in der Figur 4 dargestellt ist, als erste Führungsplatte ausgeführt sein, die die erste äußere Führungs-Oberfläche 221 a aufweist und die an einem Ende der Abdeckungsvorrichtung 50 angeordnet ist, die entgegen gesetzt zu demjenigen Ende der Abdeckungsvorrichtung 50 gelegen ist, an dem das Abdeckteil 251 gelegen ist.

Die zweite Führungsvorrichtung 220 weist bei der Ausführungsform der Figur 4 eine zweite Führungskomponente 222 insbesondere in Form einer Platte 224 auf, die aus einer an dem Formteil 30 angeordneten und in dem Innenraum S gelegenen Halterung 226 mit einer zweiten Führungs-Oberfläche 222a gebildet ist. Die zweite Führungs-Oberfläche 222a ist zur flächigen Anlage an die erste Führungs-Oberfläche 221 a und vorzugsweise planar sowie mit einem parallelen Verlauf zu der ersten Führungs-Oberfläche 221 a ausgeführt. Die zweite Führungs-Oberfläche 222a kann dabei an einem in den Innenraum S hinein ragenden Endabschnitt 228 der Halterung 226 oder an einer Führungsplatte 224 ausgebildet sein, die an dem Endabschnitt 228 angeordnet ist. Bei der Ausführung mit einer Halterung 226 entsteht bei der Herstellung des Kunststoff-Hautstücks H an einem Anschlussbereich 229 der Halterung 226 an dem Formteil 30 eine Ausnehmung in dem Kunststoff-Hautstück H. Bei der Anwendung des Kunststoff-Hautstücks H kann vorgesehen sein, dass dieses als Gestaltungselement genutzt wird oder als nicht relevanter Bereich verwendet wird.

Eine der Führungskomponenten 221, 222 kann eine Rollenvorrichtung 230 aufweisen, die aus zumindest zwei Rollen 225 gebildet ist. In der Darstellung der Figur 4 ist die Rollenvorrichtung 230 Teil der ersten Führungsvorrichtung 110 und an derjenigen Seite derselben angeordnet, die der zweiten Führungsvorrichtung 220 zugewandt gelegen ist. Die Rollenvorrichtung 230 dient der Anlage an die zweite Führungs-Oberfläche 222a. Die Verbindungslinie der momentan der zweiten Führungsvorrichtung 220 nächstgelegenen und somit äußeren Oberflächenstellen der Rollen bilden eine Ebene, die dieselbe Orientierung wie die zweite Führungs-Oberfläche 222a hat, so dass die Rollen in Anlage mit der zweite Führungs-Oberfläche 222a gelangen, sobald das Formteil 30 und der Aufnahmebehälter 40 eine entsprechende Anlage-Zwischenstellung relativ zueinander einnehmen.

Stattdessen können derartige Rollen Teil der zweiten Führungskomponente 222 sein, die an einer ersten Führungs-Oberfläche 221 a der ersten Führungskomponente 221 zur Anlage gebracht werden können.

Somit ist bei der Ausführungsform der Figur 4 generell die zweite Führungskomponente 222 an einer der Komponenten (a) oder (b) angeordnet ist, die nicht mit der ersten Führungsvorrichtung 110, 210 bewegungsgekoppelt ist, wobei die erste Führungskomponente 221 und die zweite Führungskomponente 222 bei einer Anlage-Zwischenstellung von Formteil 30 und Aufnahmebehälter 40 aneinander zur Anlage kommen und sich bei Annäherung von Formteil 30 und Aufnahmebehälter 40 entlang zueinander bewegen und dabei die Abdeckungsvorrichtung 50 von der Freigabestellung in die Abdeckungsstellung bringen.

Die Funktionsweise der konkreten Ausführungsform der Figur 4 ist aus der Zusammenschau der Figuren 4 und 5 ersichtlich: die in diesen dargestellte Ausführungsform des erfindungsgemäßen Herstellungswerkzeugs ist zwischen dem in der Figur 4 gezeigten geschlossenen Zustand und dem in der Figur 5 gezeigten offenen Zustand verstellbar. In dem geschlossenen Zustand liegt die eine Abdeckungsvorrichtung 50 mit einer Abdeckungsoberfläche 50a zur Erzeugung jeweils zumindest einer Ausnehmung H1 in dem Kunststoff-Hautstück H. Wenn die Werkzeugvorrichtung 10, ausgehend von dem offenen Zustand, in einen nicht gezeigten Anlange-Zwischenzustand gebracht wird, der sich zwischen dem offenen und geschlossenen Zustand befindet, gelangen die erste Führungskomponente 221 und die zweite Führungskomponente 222 in Anlage miteinander. Wird anschließend der Abstand zwischen dem Formteil 30 und dem Aufnahmebehälter 40 weiter verringert, bewegen sich die erste Führungs-Oberfläche 221 a und die zweite Führungs-Oberfläche 222a entlang zueinander und wird die Abdeckungsvorrichtung 50 an der ersten Führungsbahn 111 von der Freigabestellung in die Abdeckungsstellung bewegt. Der umgekehrte Ablauf ergibt sich bei einer Öffnungsbewegung der Werkzeugvorrichtung 10, bei der sich der Abstand zwischen dem Formteil 30 und dem Aufnahmebehälter 40 vergrößert.

Somit ist auch bei der Ausführungsform der Figur 4 die Bewegung zwischen der Abdeckungsstellung und der Freigabestellung mechanisch mit der Bewegung des Formteils 30 relativ zum Aufnahmebehälter 40 gekoppelt.

Bei einer Variante der Ausführungsform nach der Figur 4 kann umgekehrt die Halterung 226 an dem Aufnahmebehälter 40 und die erste Führungsvorrichtung 110 an dem Formteil 30 angeordnet oder fixiert sein. Somit ist bei der Ausführungsform nach der Figur 4 generell die erste Führungsvorrichtung 210 durch die die Abdeckungsvorrichtung 50 mit einer der Komponenten (a) dem Aufnahmebehälter (40) oder (b) dem Formteil 30 bewegungsgekoppelt und die zweite Führungsvorrichtung 220, die die Abdeckungsvorrichtung 50 an diejenige der Komponenten (a) oder (b) koppelt, die nicht mit der ersten Führungsvorrichtung 210 bewegungsgekoppelt, wobei durch die Führungsanordnung F die Abdeckungsvorrichtung 50 zwischen einer Abdeckungsstellung, bei der die Abdeckungsoberfläche 50a einen Abdeckungsabschnitt 31 der Formteil-Innenfläche 30a abdeckt, und einer Freigabestellung bewegbar ist

Bei der Ausführungsform der Werkzeugvorrichtung 10 nach den Figuren 1 und 4 hat die erste Führungsvorrichtung 110 die Funktion, die Abdeckungsvorrichtung 50 in einer Bewegung relativ zum Aufnahmebehälter 40 zu führen. Die zweite Führungsvorrichtung 120, 220 hat die Funktion, die Öffnungs- oder Schießbewegung der Öffnungs- und Schließvorrichtung 70 auf die Abdeckungsvorrichtung 50 derart zu übertragen, dass die Abdeckungsvorrichtung 50 zu einer entlang der ersten Führungsbahn 111 angetrieben wird. Die zweite Führungsvorrichtung 120 bildet somit die Stellvorrichtung der Werkzeugvorrichtung 10.

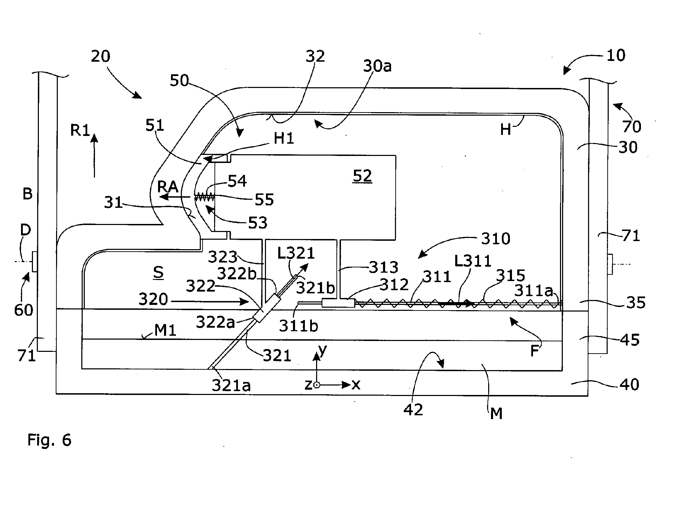

Bei der Ausführungsform der Werkzeugvorrichtung 10 der Figur 6 ist die erste Führungsvorrichtung 310 gemäß der Ausführungsform der Werkzeugvorrichtung 10 der Figur 1 gebildet und weist auf: eine erste Führungsbahn 311, die mit einem ersten Ende 311 a an dem Formteil 30 fixiert oder angebracht ist, und ein an der Abdeckungsvorrichtung 50 fixiertes oder angebrachtes erstes Koppelteil 312, das sich in einer Führungskopplung mit der ersten Führungsbahn 311 befindet, so dass das erste Koppelteil 312 entlang der ersten Führungsbahn 311 bewegbar ist. Die erste Führungsbahn 311 weist ein zweites Ende 311 b auf, das entgegen gesetzt zu dem ersten Ende 311 a gelegen ist und in den Innenraum S hineinragt. Das erste Koppelteil 312 kann über eine Verbindungsvorrichtung 313 z.B. in Form eines Haltearms (Figur 1) an dem Abdeckungsvorrichtung 50 bzw. einem Basiskörper 52 desselben angebracht sein. Das Formwerkzeug 20 weist eine Vorspannvorrichtung 315 gemäß Figur 1 auf, mit der die Abdeckungsvorrichtung 50 in die Freigabestellung vorgespannt ist.

Bei der Ausführungsform der Figur 6 ist die erste Führungsbahn 311 mit seinem ersten Ende 311 a an einer Seite des Formteils 30 angebracht, die - quer zur Längsrichtung L311 der ersten Führungsbahn 311 gesehen - dem Abdeckungsabschnitt 31 gegenüber liegt. Alternativ dazu kann die erste Führungsbahn 311 auch auf derselben Seite wie der Abdeckungsabschnitt 31 gelegen sein.

Bei der Ausführungsform der Figur 6 weist die zweite Führungsvorrichtung 320 auf: eine zweite Führungsbahn 321, die an dem Aufnahmebehälter 40 fixiert oder angebracht ist, und ein an der Abdeckungsvorrichtung 50 insbesondere mittels einer Befestigungsvorrichtung und z.B. mittels eines Abstandhalters 323 fixiertes oder angebrachtes zweites Koppelteil 322, das sich in einer Führungskopplung mit der zweiten Führungsbahn 321 befindet, so dass das zweite Koppelteil 322 entlang der zweiten Führungsbahn 321 bewegbar ist. Dabei ist wesentlich, dass eine Führung der Bewegung des zweiten Koppelteils 322 an der zweiten Führungsbahn 321 gegeben ist. Die zweite Führungsbahn 321 erstreckt sich in einer Längsrichtung L321, die sich als Verbindungslinie der Flächenschwerpunkte der jeweils kleinsten Querschnittsflächen ergibt. Da die zweite Führungsbahn 321 geradlinig oder zumindest abschnittsweise gekrümmt verlaufen kann, ist die Längsrichtung L321 generell als lokale Längsrichtung zu verstehen. Vorzugsweise verläuft die generell lokale Längsrichtung R312 der zweiten Führungsbahn 321 in einem Winkelbereich zwischen ±10 Grad und ±65 Grad zur der Y-Achse oder Formwerkzeug-Hochachse.

Die Ausführungsform der Werkzeugvorrichtung 10 kann Merkmale von an Hand der Ausführungsform der Figur 1 beschriebenen Varianten aufweisen. Beispielsweise kann, in Analogie zu der trichterförmigen Verbreiterung 125 gemäß Figur 3, ein erstes Ende 322a des zweiten Koppelteils 322, das in Bezug auf die Richtung L321 entgegen gesetzt zu einem zweiten Ende 322b desselben gelegen ist, dem ersten am Aufnahmebehälter 40 gelegenen Ende 321 a der zweiten Führungsbahn 321 zugewandt ist, mit einer sich zum Ende 321 a hin öffnenden trichterförmigen Verbreiterung der Aufnahmebohrung ausgebildet sein.

Bei Öffnung des Formwerkzeugs 20 wird das Formteil 30 in der Öffnungsrichtung R1 von dem Aufnahmebehälter 40 weg bewegt, wodurch auch das zweite Koppelteil 322 von dem ersten Ende 321 a zu dem entgegen gesetzt zu diesem gelegenen zweiten Ende 321 b hinbewegt wird. Aufgrund des Verlaufs der zweiten Führungsbahn 321 wird das erste Koppelteil 212 zum ersten Ende 311 a der ersten Führungsbahn 311 hinbewegt und das Abdeckungsvorrichtung 50 von dem Abdeckungsabschnitt 31 weg bewegt, so dass die Abdeckungsoberfläche 50a von dem Abdeckungsabschnitt 31 beabstandet liegt. In diesem Zustand dann ein an dem Formungskontur-Oberflächenabschnitt 32 gebildetes Kunststoff-Hautstück H dem Abdeckungsabschnitt 31 bzw. der Formteil-Innenfläche 30a entnommen werden.

Aufgrund des Vergleichs der Ausführungsformen nach der Figur 1, der Figur 4 und der Figur 6 ist somit die erste Führungsvorrichtung an die Abdeckungsvorrichtung und eine der folgenden Komponenten bewegungs-koppelt:
(a) den Aufnahmebehälter 40 oder
(b) Formungs-Konturoberfläche des Formwerkzeugteils,

Dabei ist die zweite Führungsvorrichtung die Abdeckungsvorrichtung an diejenige der Komponenten (a) oder (b) bewegungs-gekoppelt, die nicht an die erste Führungsvorrichtung bewegungs-gekoppelt ist.

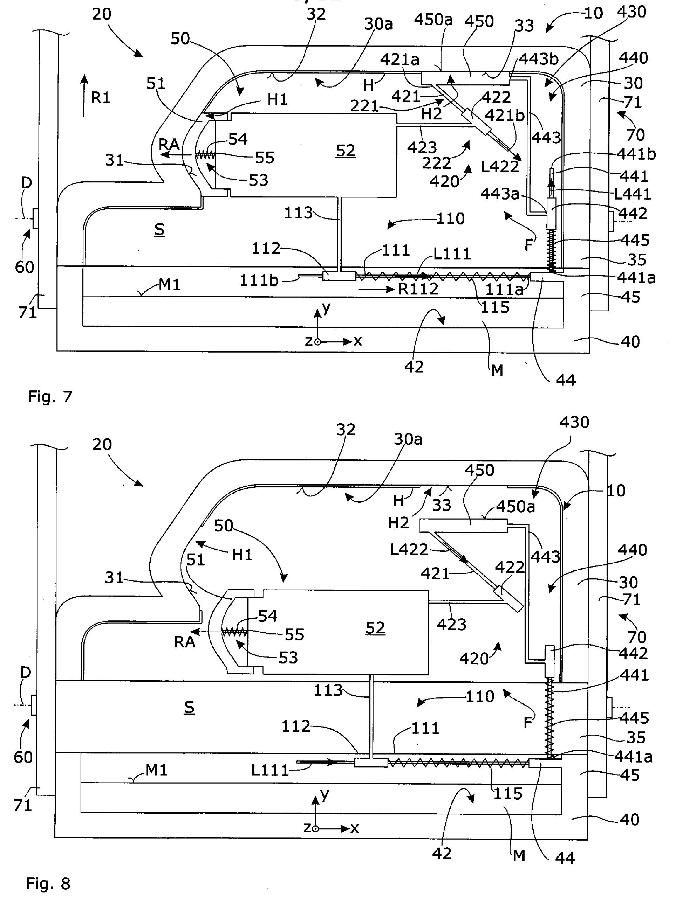

Die Figuren 7 und 8 zeigen eine weitere Ausführungsform der erfindungsgemäßen Werkzeugvorrichtung 10, bei der die erste Führungsvorrichtung 110 gemäß der Ausführungsform der Werkzeugvorrichtung 10 der Figuren 1 und 2 ausgeführt ist und kann auch nach einer Variante derselben gebildet sein, wobei durch die erste Führungsvorrichtung 110 die Abdeckungsvorrichtung 50 entlang einer Längsrichtung L111 an dem Aufnahmebehälter 40 bewegbar koppelt. Generell ist durch die erste Führungsvorrichtung die Abdeckungsvorrichtung 50 an einer der Komponenten (a) dem Aufnahmebehälter 40 oder (b) dem Formteil 30 als hierin generell bezeichnete erste Formwerkzeug-Komponente bewegungs-gekoppelt.

Die Führungsanordnung F weist weiterhin eine zweite Führungsvorrichtung 420 auf, die die Abdeckungsvorrichtung 50 entlang einer zu der ersten Längsrichtung L111 unterschiedlichen zweiten Längsrichtung L422 relativ zu der Anlagevorrichtung 450 bewegbar koppelt. Generell kann die gegebenenfalls lokale unterschiedliche Orientierung der Längsrichtungen L111, L422 in einem Winkelbereich zwischen20 Grad und85 Grad und insbesondere zwischen30 Grad und60 Grad gelegen ist.

Die zweite Führungsvorrichtung 420 der Ausführungsform der Figuren 7 und 8 kann insbesondere aufweisen: eine zweite Führungsbahn 421, die an dem Aufnahmebehälter 40 angebracht oder mit diesem gekoppelt ist, und ein an der Abdeckungsvorrichtung 50 insbesondere mittels einer Befestigungsvorrichtung wie z.B. einer Befestigungsstange oder Abstandshalter 423 fixiertes oder angebrachtes zweites Koppelteil 422, das sich in einer Führungskopplung mit der zweiten Führungsbahn 421 befindet, so dass das zweite Koppelteil 422 entlang der zweiten Führungsbahn 421 bewegbar ist und eine Führung der Bewegung des zweiten Koppelteils 422 an der zweiten Führungsbahn 421 gegeben ist. Bei der Ausführungsform der Abdeckungsvorrichtung 50 mit einem Basiskörper 52 und einem an diesem bewegbar angeordneten Abdeckungskörper 51 kann das zweite Koppelteil 422 an dem Basiskörper 52 angebracht und insbesondere fixiert sein.

Bei einer Bewegung der ersten und der zweiten Formwerkzeug-Komponente von einer offenen in eine geschlossene Stellung des Formwerkzeugs 20 die Anlagevorrichtung 450 und die jeweilige zweite Formwerkzeug-Komponente bei einer als Formwerkzeug-Anlagestellung bezeichneten Zwischenstellung in Anlage miteinander gebracht wird und durch Führung der ersten und zweiten Führungsvorrichtung die Abdeckungsoberfläche 50a von einer Freigabestellung, bei der die Abdeckungsoberfläche 50a von der Formteil-Innenfläche 30a und die Anlagevorrichtung 450 von der Primär-Komponente abgesetzt ist, in Anlage mit einem Abdeckungsabschnitt 31 der Formteil-Innenfläche 30a bewegt wird

Die Ausführungsform der Figur 7 weist eine Betätigungsvorrichtung 430 mit einer Anlagevorrichturig 450 auf, die einerseits das zweite Koppelteil 422 und andererseits, wie in der Figur 7 dargestellt, den Aufnahmebehälter 40 miteinander koppelt, wenn die erste Führungsvorrichtung 110 an dem Aufnahmebehälter 40 gekoppelt ist. Die Betätigungsvorrichtung 430 ist derart ausgeführt, dass die Anlagevorrichtung 450 zumindest bei einem Bewegungs-Endabschnitt beim Schließen der Werkzeugvorrichtung 10 oder beim Bewegen von Formteil 30 und Aufnahmebehälter 40 in ihrer geschlossene Stellung an dem Formteil 30 anliegt. Insbesondere koppelt die Betätigungsvorrichtung 430 die Abdeckungsvorrichtung 50, die Anlagevorrichtung 450 und den Aufnahmebehälter 40 bzw. eine jeweilige zweite Formwerkzeug-Komponente. Bei einer Bewegung von Formteil 30 und Aufnahmebehälter 40 in ihre geschlossene Stellung werden die Anlagevorrichtung 450 und die jeweilige zweite Formwerkzeug-Komponente in Anlage miteinander gebracht sowie die Abdeckungsoberfläche 50a von einer Freigabestellung, bei der die Abdeckungsoberfläche 50a von der Formteil-Innenfläche 30a und die Anlagevorrichtung 450 von der Primär-Komponente abgesetzt ist, in Anlage mit einem Abdeckungsabschnitt 31 der Formteil-Innenfläche 30a bewegt.

Die Betätigungsvorrichtung 430 weist eine Stützvorrichtung 440 auf, die an dem Aufnahmebehälter40 als der jeweiligen ersten Formwerkzeug-Komponente fixiert ist. Die Betätigungsvorrichtung 430 weist auch ein Stellteil in Form der Führungsbahn 421 auf, das an der Anlagevorrichtung 450 einerseits fixiert ist und eine erste Führungskomponente 221 der zweiten Führungsvorrichtung 220 bildet, so dass zumindest in einem Bewegungsabschnitt mit dem Schließen des Formwerkzeugs 20, bei dem sich die Anlagevorrichtung 450 und das Formteil 30 als der jeweiligen zweiten Formwerkzeug-Komponente miteinander in Anlage befinden, die Relativbewegung zwischen der Anlagevorrichtung 450 und dem Aufnahmebehälter 40 als der ersten Formwerkzeug-Komponente auf die erste Führungskomponente 221 der zweiten Führungsvorrichtung 420 übertragen wird.

Dabei befinden sich zumindest in einem das Schließen beinhaltenden Bewegungsabschnitt der Öffnungs- und Schließbewegung die Anlagevorrichtung 450 und das Formteil 30 in Anlage miteinander.

Bei der in der Figur 7 dargestellten Ausführungsform ist die zweite Führungsvorrichtung 420 wie folgt ausgeführt:
- Die zweite Führungsbahn 421 ist mit einem ersten Ende 421 a an einer Anlagevorrichtung 450 mit einer Anlage-Oberfläche 450a angebracht. Die Anlagevorrichtung 450 kann insbesondere als zweite Abdeckungsvorrichtung zur Erzeugung einer weiteren Ausnehmung H2 in dem herzustellenden Kunststoff-Hautstück H ausgeführt sein, so dass die Werkzeugvorrichtung 10 die erste Abdeckungsvorrichtung 50 und die zweite Abdeckungsvorrichturig 450 zur Herstellung von Ausnehmungen H1, H2 im Kunststoff-Hautstück H aufweist. Weiterhin weist die zweite Führungsbahn 421 ein freies Ende 421 b auf, das entgegen gesetzt zu dem ersten Ende 421 a gelegen ist. Umgekehrt kann auch vorgesehen sein, dass die zweite Führungsbahn 421 an der ersten Abdeckungsvorrichtung 50 und gegebenenfalls an dem Basisteil 52 fixiert oder angebracht ist und dass das zweite Koppelteil 422 an der zweiten Abdeckungsvorrichtung 450 fixiert oder angebracht ist. Das zweite Koppelteil 422 bildet eine zweite Führungskomponente 222 der zweiten Führungsvorrichtung 220.
- Die Anlagevorrichtung 450 ist zur Abdeckung eines zweiten Abdeckungsabschnitts 33 der Formteil-Innenfläche 30a bei der Bildung des Kunststoff-Hautstücks H vorgesehen, so dass die Formteil-Innenfläche 30a aus dem Formungskontur-Oberflächenabschnitt 32 und dem ersten und zweiten Abdeckungsabschnitt 31, 33 gebildet ist. An die zweite Führungsbahn 421 können auch mehrere Anlagevorrichtungen 450 befestigt sein, die in Bezug auf die Draufsicht auf die Formteil-Innenfläche 30a nebeneinander gelegen sind.
- Die zweite Führungsbahn 421 erstreckt sich in einer Längsrichtung L421, die sich als Verbindungslinie der Flächenschwerpunkte der jeweils kleinsten Querschnittsflächen der Führungsbahn 421 ergibt. Da die zweite Führungsbahn 421 geradlinig oder zumindest abschnittsweise gekrümmt verlaufen kann, ist die Längsrichtung L421 generell als lokale Längsrichtung zu verstehen.

Bei der dargestellten Ausführungsform ist die Betätigungsvorrichtung 430 im Detail wie folgt ausgeführt: Die Anlagevorrichtung 450 ist über eine Verbindungsvorrichtung 443 mit einem dritten Kopplungsteil 442 verbunden. Vorzugsweise ist die Verbindungsvorrichtung 443 als starre Verbindung ausgeführt. Diese kann auch als Übertragungsmechanik wie z.B. als Übersetzungsvorrichtung ausgeführt sein. Bei der Ausführungsform der Figur 7 ist die Verbindungsvorrichtung 443 stabförmig ausgebildet und mit einem ersten Ende 443a an dem dritten Koppelteil 442 befestigt und mit einem zweiten Ende 443b an der Anlagevorrichtung 450 befestigt. Das dritte Koppelteil 442 ist an eine dritte Führungsbahn 441 gekoppelt, die an dem Aufnahmebehälter 40 oder einem Stützabschnitt 45 desselben befestigt ist. Die lokale Längsrichtung L441 der dritten Führungsbahn 441 verläuft vorzugsweise entlang der Y-Achse. In der Ausführungsform der Figur 7 ist die dritte Führungsbahn 441 als Stützvorrichtung 440 mit einem ersten Ende 441 a an dem Stützabschnitt 44 befestigt und kann von diesem weg ragen, so dass dann das entgegen gesetzt zu diesem gelegene Ende 441 b ein freies Ende ausbildet. Alternativ kann das Ende 441 b auch an einer Stützvorrichtung des Aufnahmebehälters 40 abgestützt sein. Die Betätigungsvorrichtung 430 kann eine Vorspannvorrichtung 445 insbesondere in Form einer Feder aufweisen, die zwischen dem Aufnahmebehälter 40 oder dem Stützabschnitt 45 und dem dritten Kopplungsteil 442 gelagert ist und das dritte Koppelteil 442 in eine Stellung von dem Aufnahmebehälter 40 aus gesehen in Richtung zu dem Formteil 30 vorspannt.

Insbesondere kann vorgesehen sein, dass die Orientierung der zweiten Führungsbahn 421 insgesamt in einem Winkelbereich zwischen 20 Grad und 85 Grad und insbesondere zwischen 30 Grad und 60 Grad relativ zur Richtung der ersten Führungsbahn 111 verläuft. Bei einer gekrümmten ersten Führungsbahn 111 kann insbesondere vorgesehen sein, dass die Orientierung der zweiten Führungsbahn 421 insgesamt in einem Winkelbereich zwischen 20 Grad und 85 Grad und insbesondere zwischen 30 Grad und 60 Grad zu den lokalen Richtungen der ersten Führungsbahn 111 verläuft.

Dazu alternativ oder zusätzlich kann insbesondere vorgesehen sein, dass die Orientierung der durch die Betätigungsvorrichtung 430 bereitgestellten Bewegung insgesamt in einem Winkelbereich zwischen 20 Grad und 85 Grad und insbesondere zwischen 30 Grad und 60 Grad relativ zur Richtung der ersten Führungsbahn 111 verläuft. Bei einer gekrümmten ersten Führungsbahn 111 kann insbesondere vorgesehen sein, dass die durch die Betätigungsvorrichtung 430 bereitgestellte Bewegung insgesamt in einem Winkelbereich zwischen 20 Grad und 80 Grad und insbesondere zwischen 30 Grad und 60 Grad zu den lokalen Richtungen der ersten Führungsbahn 111 verläuft.

Bei der Öffnung des Formwerkzeugs 20 durch Wegbewegen des Formteils 30 von dem Aufnahmebehälter 40 wird das zweite Koppelteil 422 an der zweiten Führungsbahn 421 in der Längsrichtung L441 derselben zum zweiten Ende 421 b hin bewegt. Die Führungsanordnung F kann derart ausgeführt sein, dass dadurch die Anlagevorrichtung 450 von ihrer Abdeckungsstellung, bei der diese an der Formteil-Innenfläche 30a anliegt und den Abdeckungsabschnitt 33 abdeckt, in die Freigabestellung bewegt wird, bei der die Abdeckungsoberfläche 50a von der Formteil-Innenfläche 30a abgesetzt ist. Je nach der Ausführungsform, also bei der in der Figur 7 gezeigten Ausführungsförm wird gleichzeitig das dritte Koppelteil 442 in der Längsrichtung L441 der dritten Führungsbahn 441 zum zweiten Ende 441 b hin bewegt. An der dritten Führungsbahn 441 und zwischen dem ersten Ende 441 a derselben und dem dritten Koppelteil 442 kann eine Druckfeder 445 oder eine Vorspannvorrichtung angeordnet sein, die das dritte Koppelteil 442 in die in Figur 7 eingezeichnet Längsrichtung L441 drückt, um die Anlagevorrichtung 450 bei der geschlossenen Zustand des Formwerkzeugs 20 an die Formteil-Innenfläche 30a anzudrücken und die Abdeckungsabschnitt 33 möglichst dicht abzudecken.

Bei einer nicht in den Figuren dargestellten, jedoch analog zur Ausführungsform der Figur 6 gebildeten Variante dieser Ausführungsform ist sowohl die die erste Führungsvorrichtung also auch die zweite Führungsvorrichtung 420 an dem Aufnahmebehälter 40 gekoppelt. Dabei ist die Betätigungsvorrichtung mit gleicher Funktion einerseits an dem zweiten Koppelteil 422 und andererseits an dem Formteil 30 gekoppelt, wie auch die erste Führungsvorrichtung 110 an dem Formteil 30 gekoppelt ist. Die Betätigungsvorrichtung ist derart ausgeführt, dass die Anlagevorrichtung 450 zumindest bei einem Bewegungs-Endabschnitt beim Schließen der Werkzeugvorrichtung 10 oder beim Bewegen von Formteil 30 und Aufnahmebehälter 40 in ihrer geschlossene Stellung an dem Formteil 30 anliegt. Die Betätigungsvorrichtung ist derart ausgeführt, dass die Anlagevorrichtung 450 zumindest bei einem Bewegungs-Endabschnitt beim Schließen der Werkzeugvorrichtung 10 oder beim Bewegen von Formteil 30 und Aufnahmebehälter 40 in ihrer geschlossene Stellung an dem Aufnahmebehälter 40 anliegt und
- bei einer Bewegung von Formteil 30 und Aufnahmebehälter 40 in ihre geschlossene Stellung die Anlagevorrichtung 450 und Aufnahmebehälter 40 in Anlage miteinander bringt und
- durch die Kopplung der Betätigungsvorrichtung mit der Aufnahmebehälter 40 die Abdeckungsoberfläche 50a von einer Freigabestellung, bei der die Abdeckungsoberfläche 50a von der Formteil-Innenfläche 30a und die
Anlagevorrichtung 450 von der Formteil 30 abgesetzt ist, in Anlage mit einem Abdeckungsabschnitt 31 der Formteil-Innenfläche 30a bewegt.

Alle anhand der Figur 7 beschriebenen Ausführungsformen können auch bei dieser zweiten Variante vorgesehen sein. Insbesondere kann bei den anhand oder analog zu der Figur 7 beschriebenen Ausführungsformen vorgesehen sein, dass die Führungsbahn 421 an der Abdeckungsvorrichtung 50 und das zweite Koppelteil 422 an der Anlagevorrichtung 450 angebracht oder fixiert sein.

Somit weisen die anhand oder analog zu der Figur 7 beschriebenen Ausführungsformen eine Führungsanordnung F auf mit:
- einer ersten und einer zweiten Führungsvorrichtung 410 auf, durch die jeweils die Abdeckungsvorrichtung 50 mit einer der Komponenten (a) dem Aufnahmebehälter 40 oder (b) dem Formteil 30 als erste Formwerkzeug-Komponente gekoppelt ist, wobei die jeweils andere der Komponenten (a) oder (b) eine zweite Formwerkzeug-Komponente ist,
- die Betätigungsvorrichtung 430, die die Anlagevorrichtung 450 und die jeweilige zweite Formwerkzeug-Komponente bei einer Bewegung von Formteil 30 und Aufnahmebehälter 40 in ihre geschlossene Stellung in Anlage miteinander bringt und durch die Kopplung der Betätigungsvorrichtung 430 mit der jeweiligen ersten Formwerkzeug-Komponente die Abdeckungsoberfläche 50a von einer Freigabestellung, bei der die Abdeckungsoberfläche 50a von der Formteil-Innenfläche 30a und die Anlagevorrichtung 450 von der Primär-Komponente abgesetzt ist, in Anlage mit einem Abdeckungsabschnitt 31 der Formteil-Innenfläche 30a bewegt.

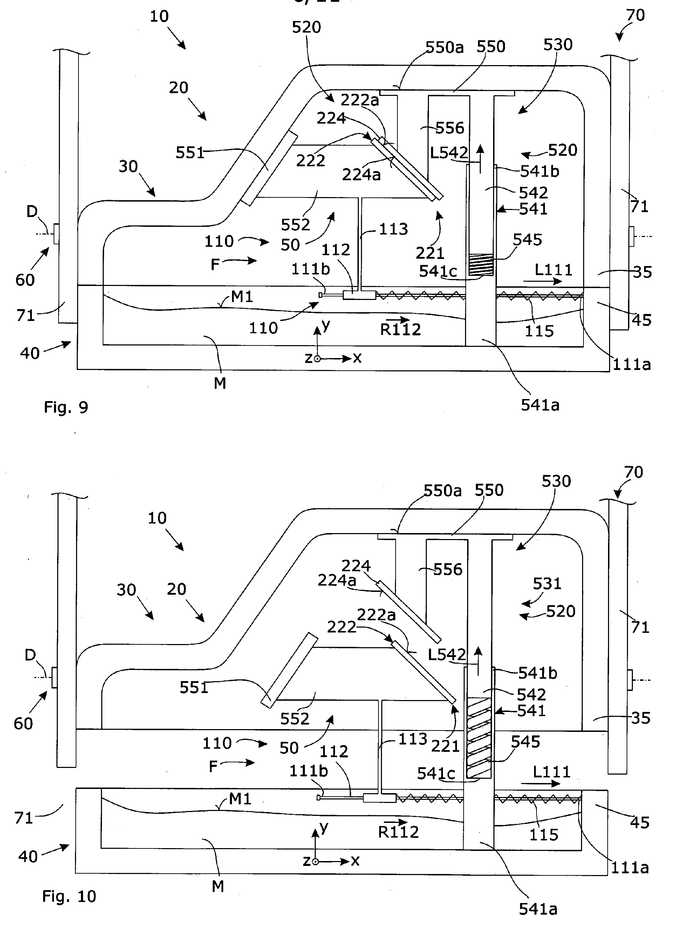

Die Ausführungsform nach der Figur 9 basiert auf der Ausführungsform der Figur 7.

Bei der Ausführungsform der Figur 9 koppelt die erste Führungsvorrichtung 110, die gemäß der Figur 1 ausgeführt ist, die Abdeckungsvorrichtung 50 bewegbar entlang einer Längsrichtung L111. Die erste Führungsvorrichtung 110 kann auch auf andere Weise ausgeführt sein kann. Bei der dargestellten Ausführungsform ist die Abdeckungsvorrichtung 50 und insbesondere ein Basiskörper 552 desselben an einer als Längsführung ausgebildeten ersten Führungsvorrichtung 510 angekoppelt und geführt, um die Bewegung der Abdeckungsvorrichtung 50 und insbesondere des Basiskörpers 552 gegenüber dem Formteil 30 zwischen der Freigabe- und der Abdeckungsstellung zu führen. An dem Basiskörper 552 kann ein Abdeckungsteil 551 bewegungsfest oder an diesem bewegbar und in einer ausgefahrenen Stellung vorgespannt angebracht sein.

Eine Betätigungsvorrichtung 530 koppelt zumindest abschnittsweise die Bewegungen der Anlagevorrichtung 550 und des Formteils 30 relativ zum Aufnahmebehälter 40. Die zweite Führungsvorrichtung 520 koppelt die Bewegungen der Abdeckungsvorrichtung 50 und der Anlagevorrichtung 550.

Die Figuren 9 und 10 zeigen eine Ausführungsform von grundsätzlich zwei Ausführungsformen,
- bei denen die erste Führungsvorrichtung die Abdeckungsvorrichtung 50 an einer der Komponenten (a) dem Aufnahmebehälter 40 oder (b) dem Formteil 30 als hierin generell bezeichnete erste Formwerkzeug-Komponente bewegungs-gekoppelt und die zweite Führungsvorrichtung die Abdeckungsvorrichtung 50 und die Anlagevorrichtung 550 bewegungs-koppelt, wobei die jeweils andere der Komponenten (a) oder (b) als eine zweite Formwerkzeug-Komponente definiert ist,
- wobei bei einer Bewegung der ersten und der zweiten Formwerkzeug-Komponente von einer offenen in eine geschlossene Stellung des Formwerkzeugs 20 die Anlagevorrichtung 550 und diejeweilige zweite Formwerkzeug-Komponente bei einer als Formwerkzeug-Anlagestellung bezeichneten Zwischenstellung in Anlage miteinander gebracht wird und durch Führung der ersten und zweiten Führungsvorrichtung die Abdeckungsoberfläche 50a von einer Freigabestellung, bei der die Abdeckungsoberfläche 50a von der Formteil-Innenfläche 30a und die
Anlagevorrichtung 550 von der Primär-Komponente abgesetzt ist, in Anlage mit einem Abdeckungsabschnitt 31 der Formteil-Innenfläche 30a bewegt wird.

Bei der in der Figur 9 dargestellten Ausführungsform koppelt die erste Führungsvorrichtung 110 die Abdeckungsvorrichtung 50 entlang der ersten Längsrichtung L111 bewegbar mit dem Aufnahmebehälter 40 als der jeweiligen ersten Formwerkzeug-Komponente. Die zweite Führungsvorrichtung 520 mit einer ersten Führungskomponente 221 und einer zweiten Führungskomponente 222 koppelt die Bewegung der Abdeckungsvorrichtung 50, die von der Bewegung der jeweiligen zweiten Formwerkzeug-Komponente verursacht ist, mit der Bewegung eines an der Anlagevorrichtung 550 fixierten Stellteils 556.

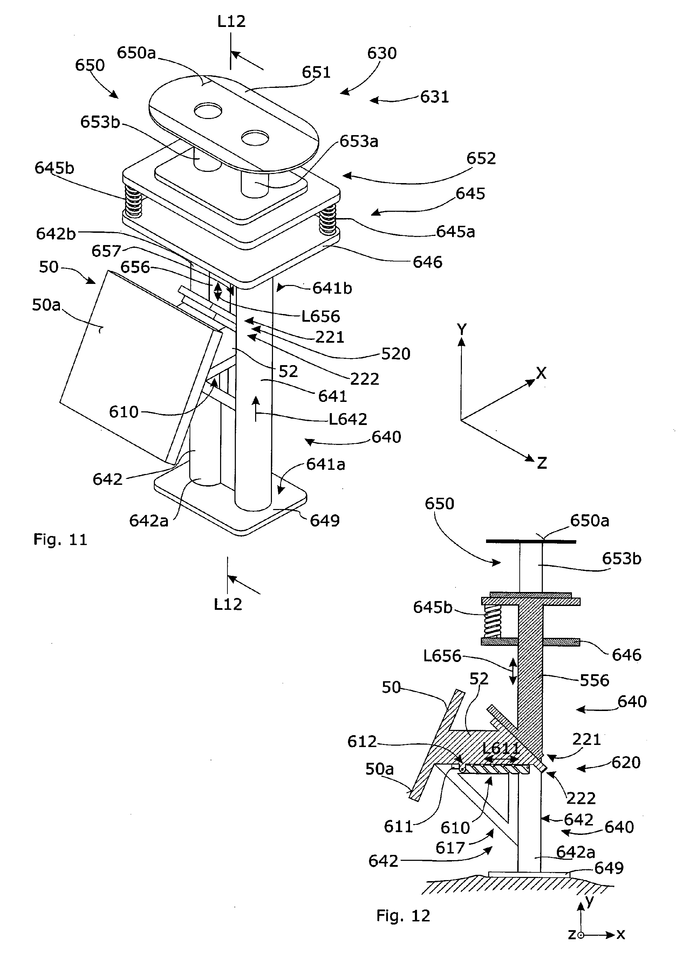

Die zweite Führungsvorrichtung 520 kann insbesondere auch nach der zweiten Führungsvorrichtung 220 der Figur 4 oder, wie dargestellt, der zweiten Führungsvorrichtung 620 der Figur 11 ausgeführt sein und kann die in diesem jeweiligen Zusammenhang beschriebenen Merkmale aufweisen oder nach dabei genannten Varianten ausgeführt sein. Die zweite Führungsvorrichtung 520 weist auf: eine sich in einer Längsrichtung flächig erstreckende und insbesondere plattenförmig ausgebildete, an dem Stellteil 556 fixierte erste Führungskomponente 221, die als Platte 224 ausgeführt sein kann und insbesondere eine Anlagefläche 224a aufweist, und eine sich in einer Längsrichtung flächig erstreckende und insbesondere plattenförmig ausgebildete, an der Abdeckungsvorrichtung 50 oder dessen Basisteil 52 fixierte zweite Führungskomponente 222 mit einer zweiten Anlagefläche 222a, die bei einer Bewegung von Formteil 30 und Aufnahmebehälter 40 in ihre geschlossene Stellung in Anlage miteinander sind, dabei entlang ihren jeweiligen Längsrichtungen aneinander geführt sind und die Bewegung von Formteil 30 und der Aufnahmebehälter 40 relativ zueinander in die geschlossene Stellung in eine Bewegung der Abdeckungsvorrichtung 50 in die Abdeckungsstellung umzulenken. Dabei kann die zweite Führungsvorrichtung 520 insbesondere gemäß der Figur 4 und Merkmalen ausgeführt sein, die in Bezug auf die Ausführungsform der Figur 4 beschrieben wurden. Dabei ist eine Stellstange 556 an der Abdeckungsvorrichtung 450 befestigt.

Die Betätigungsvorrichtung 530 ist derart ausgeführt, dass die Anlagevorrichtung 450 zumindest bei einem Bewegungs-Endabschnitt beim Schließen der Werkzeugvorrichtung 10 oder beim Bewegen von Formteil 30 und Aufnahmebehälter 40 in ihrer geschlossene Stellung an dem Formteil 30 anliegt. Insbesondere koppelt die Betätigungsvorrichtung 530 die Abdeckungsvorrichtung 50, die Anlagevorrichtung 550 und die jeweilige zweite Formwerkzeug-Komponente und bringt bei einer Bewegung von Formteil 30 und Aufnahmebehälter 40 bei einer Formwerkzeug-Anlagestellung in ihre geschlossene Stellung die Anlagevorrichtung 550 und den Aufnahmebehälter 40 bzw. eine jeweilige zweite Formwerkzeug-Komponente in Anlage miteinander sowie bewegt die Abdeckungsoberfläche 50a von einer Freigabestellung, bei der die Abdeckungsoberfläche 50a von der Formteil-Innenfläche 30a und die Anlagevorrichtung 550 von der Primär-Komponente abgesetzt ist, in Anlage mit einem Abdeckungsabschnitt 31 der Formteil-Innenfläche 30a. Dabei befinden sich zumindest in einem das Schließen beinhaltenden Bewegungsabschnitt der Öffnungs- und Schließbewegung die Anlagevorrichtung 550 und das Formteil 30 in Anlage miteinander.

Die Anlagevorrichtung 550 ist über eine Verbindungsvorrichtung 542 in Form eines Führungskolbens in einer dritten Führungsbahn 541 in Form eines Führungskolbens - oder umgekehrt -gekoppelt. Die dritte Führungsbahn 541 oder der Führungskolben ist an dem Aufnahmebehälter 40 oder einem Stützabschnitt 45 desselben befestigt. Die lokale Längsrichtung L541 der dritten Führungsbahn 541 verläuft vorzugsweise entlang der Y-Achse. In der Ausführungsform der Figur 9 ist die dritte Führungsbahn 541 mit einem ersten Ende 541 a an einem Stützabschnitt befestigt und ragt von diesem weg, so dass dann das entgegen gesetzt zu diesem gelegene Ende 541 b ein freies Ende ausbildet. Alternativ kann das Ende 541 b auch an einer Stützvorrichtung des Aufnahmebehälters 40 abgestützt sein. Die Betätigungsvorrichtung 530 kann eine Vorspannvorrichtung 545 insbesondere in Form einer Feder aufweisen, die zwischen
- einem Boden 541 c der dritten Führungsbahn 541 oder dem Aufnahmebehälter 40 oder einem Stützabschnitt 45 und
- der Verbindungsvorrichtung 542 bzw. dem Führungskolben
gelagert ist, und die Verbindungsvorrichtung 542 bzw. den Führungskolben in eine Stellung von dem Aufnahmebehälter 40 aus gesehen in Richtung zu dem Formteil 30 vorspannt.

Insbesondere kann vorgesehen sein, dass die Orientierung der durch die Betätigungsvorrichtung 530 bereitgestellten Bewegung insgesamt in einem Winkelbereich zwischen 20 Grad und 85 Grad und insbesondere zwischen 30 Grad und 60 Grad relativ zur Richtung der ersten Führungsbahn 111 verläuft. Bei einer gekrümmten ersten Führungsbahn 111 kann insbesondere vorgesehen sein, dass die durch die Betätigungsvorrichtung 530 bereitgestellte Bewegung insgesamt in einem Winkelbereich zwischen 20 Grad und 80 Grad und insbesondere zwischen 30 Grad und 60 Grad zu den lokalen Richtungen der ersten Führungsbahn 111 verläuft.

Die Figuren 11 und 12 zeigen eine weitere Kombination der ersten Führungsvorrichtung 610, der zweiten Führungsvorrichtung 620 und der Betätigungsvorrichtung 630 mit der in einer Richtung L656 bewegbaren Anlagevorrichtung 650 mit einer Anlageoberfläche 650a, die in ein Formwerkzeug 20 nach der Figur 9 eingesetzt sein und in einer ersten Alternative in Kombination mit einer ersten Führungsvorrichtung 110 z.B. gemäß der Figur 1 realisiert sein könnte. Die Betätigungsvorrichtung 630 koppelt zumindest abschnittsweise die Bewegungen der Anlagevorrichtung 650 und des Formteils 30 relativ zum Aufnahmebehälter 40. Bei der dargestellten Ausführungsform ist die Abdeckungsvorrichtung 50 und insbesondere ein Basiskörper 52 desselben an einer als Längsführung in Richtung L611 ausgebildeten ersten Führungsvorrichtung 610 angekoppelt und geführt, um die Bewegung der Abdeckungsvorrichtung 50 und insbesondere des Basiskörpers 52 gegenüber dem Formteil 30 zwischen der Freigabe- und der Abdeckungsstellung zu führen. Die zweite Führungsvorrichtung 620 koppelt die Bewegungen der Abdeckungsvorrichtung 50 und der Anlagevorrichtung 650.

Die Figuren 11 und 12 zeigen eine Ausführungsform von grundsätzlich zwei Ausführungsformen,
- bei denen die erste Führungsvorrichtung die Abdeckungsvorrichtung 50 an einer der Komponenten (a) dem Aufnahmebehälter 40 oder (b) dem Formteil 30 als hierin generell bezeichnete erste Formwerkzeug-Komponente bewegungs-gekoppelt und die zweite Führungsvorrichtung die Abdeckungsvorrichtung 50 und die Anlagevorrichtung 650 bewegungs-koppelt, wobei die jeweils andere der Komponenten (a) oder (b) als eine zweite Formwerkzeug-Komponente definiert ist,
- wobei bei einer Bewegung der ersten und der zweiten Formwerkzeug-Komponente von einer offenen in eine geschlossene Stellung des Formwerkzeugs 20 die Anlagevorrichtung 650 und die jeweilige zweite Formwerkzeug-Komponente bei einer als Anlage-Stellung bezeichneten Zwischenstellung in Anlage miteinander gebracht wird und durch Führung der ersten und zweiten Führungsvorrichtung die Abdeckungsoberfläche 50a von einer Freigabestellung, bei der die Abdeckungsoberfläche 50a von der Formteil-Innenfläche 30a und die Anlagevorrichtung 650 von der Primär-Komponente abgesetzt ist, in Anlage mit einem Abdeckungsabschnitt 31 der Formteil-Innenfläche 30a bewegt wird.

Bei der in der Figur 11 dargestellten Ausführungsform koppelt die erste Führungsvorrichtung 610 die Abdeckungsvorrichtung 50 entlang der ersten Längsrichtung L611 bewegbar mit dem Aufnahmebehälter40 als der jeweiligen ersten Formwerkzeug-Komponente. Die zweite Führungsvorrichtung 620 mit einer ersten Führungskomponente 221 und einer zweiten Führungskomponente 222 koppelt die Bewegung der Abdeckungsvorrichtung 50, die von der Bewegung der jeweiligen zweiten Formwerkzeug-Komponente verursacht ist, mit der Bewegung eines an der Anlagevorrichtung 650 fixierten Stellteils 656.

Die Längsführung oder erste Führungsvorrichtung 610 kann aus einer Führungsbahn 611 und einer an der Abdeckungsvorrichtung 50 und insbesondere einem Basiskörper 52 desselben ausgebildeten Führungsaufnahme 612 gebildet sein, die auf der Führungsbahn 611 entlang einer ersten Längsrichtung L611 bewegbar oder verschiebbar geführt ist. Die Führungsbahn 611 ist mittels einer Befestigungsvorrichtung 617 an einer Stützvorrichtung 640 befestigt. Die Stützvorrichtung 640 ist an dem Aufnahmebehälter 40 fixiert. Die zweite Führungsvorrichtung kann insbesondere auch nach der zweiten Führungsvorrichtung 220 der Figur 4 oder, wie dargestellt, der zweiten Führungsvorrichtung 520 der Figur 9 ausgeführt sein und kann die in diesem jeweiligen Zusammenhang beschriebenen Merkmale aufweisen oder nach dabei genannten Varianten ausgeführt sein.

Die Betätigungsvorrichtung 630 weist eine Anlagevorrichtung 650, die im Wesentlichen nach der in der Figur 9 dargestellten Anlagevorrichtung 550 gebildet ist. Die Betätigungsvorrichtung 630 weist eine Stützvorrichtung 640 auf, die an dem Aufnahmebehälter40 als der jeweiligen ersten Formwerkzeug-Komponente fixiert ist. Die Betätigungsvorrichtung 630 weist auch ein Stellteil 656 auf, das an der Anlagevorrichtung 650 einerseits und an der ersten Führungskomponente 221 der zweiten Führungsvorrichtung 220 andererseits fixiert ist, so dass zumindest in einem Bewegungsabschnitt mit dem Schließen des Formwerkzeugs 20, bei dem sich die Anlagevorrichtung 650 und das Formteil 30 als der jeweiligen zweiten Formwerkzeug-Komponente miteinander in Anlage befinden, die Relativbewegung zwischen der Anlagevorrichtung 650 und dem Aufnahmebehälter 40 als der ersten Formwerkzeug-Komponente auf die erste Führungskomponente 221 der zweiten Führungsvorrichtung 520 übertragen wird.

Bei der dargestellten Ausführungsform weist die Betätigungsvorrichtung 630 eine an dem Aufnahmebehälter 40 befestigte Stützvorrichtung 640 auf, an der die Anlagevorrichtung 650 bewegbar geführt ist, wobei diese zumindest bei einem Bewegungs-Endabschnitt beim Schließen der Werkzeugvorrichtung 10 oder beim Bewegen von Formteil 30 und Aufnahmebehälter 40 in ihrer geschlossene Stellung an dem Formteil 30 anliegt.

Bei der dargestellten Ausführungsform ist die Betätigungsvorrichtung 630 wie folgt ausgeführt: An der Anlagevorrichtung 650 ist ein Stellteil oder eine Verbindungsvorrichtung 656 fixiert, das in Form einer Stellstange oder eines Stellkolbens, das der Stellstange 556 entspricht, realisiert sein kann. Zur Bewegungskopplung des Stellteils oder der Verbindungsvorrichtung 656 an der Stützvorrichtung 640 kann an dieser eine Führungsbahn 657 - oder umgekehrt - ausgeführt sein, wobei die Verbindungsvorrichtung 656 an dieser zwischen der Anlagestellung, die bei einer Formwerkzeug-Anlagestellung eintritt, und einer von dem Formteil 30 beabstandeten Stellung, die bei einem Abstand zwischen dem Formteil 30 und dem Aufnahmebehälter 40, der größer als deren Abstand in der Formwerkzeug-Anlagestellung ist, bewegbar geführt ist. Die Stellteil-Führungsbahn 657 kann durch zwei jeweils an einander gegenüber liegenden Längsseiten der Stützvorrichtung 640 ausgebildete Führungsbahnabschnitte realisiert sein, wobei sich die Führungsbahnabschnitte längs nebeneinander erstrecken.

Die Anlagevorrichtung 650 weist eine Anlageplatte 651 mit einer Anlageoberfläche 651 a, eine starre Grundplatte 652 und zumindest einen zwischen dieser und der Anlageplatte 451 angeordneten und diese befestigenden Verbindungskörper 652a, 652a auf. Die Anlageplatte 651 ist an der Grundplatte 652 über zumindest ein insbesondere rohrförmiges Befestigungsteil 653a, 653b befestigt und von der Grundplatte 652 entlang der Längsrichtung L656 oder Bewegungsrichtung der zumindest einen Stellstange 656 beabstandet angeordnet. Vorzugsweise verlaufen die lokale Längsrichtung L656 der Stellteil-Führungsbahn 657 entlang der Y-Achse.

Die Stützvorrichtung 640 ist an dem Aufnahmebehälter 40 oder der Lagerplatte 649 befestigt und ragt von diesem weg. Bei der dargestellten Ausführungsform ist die Stützvorrichtung 640 durch zwei insbesondere rohrförmig ausgebildete und sich entlang einer Längsrichtung L642 erstreckenden Stützteile 641, 642 ausgeführt, die an dem Aufnahmebehälter 40 oder einer auf dieser montierbaren oder mit dieser verbindbaren Lagerplatte 649 befestigt sind. In der Ausführungsform der Figur 11 ist sind die Stützteile 641 a, 641 b jeweils mit einem ersten Ende 641 a bzw. 642a an dem Aufnahmebehälter 40 oder der Lagerplatte 649 befestigt und ragen von diesem weg, so dass dann die entgegen gesetzt zu diesem gelegenen zweiten Enden 641 b bzw. 642b jeweils ein freies Ende ausbilden. Die Betätigungsvorrichtung 630 kann zumindest eine Vorspannvorrichtung 645 insbesondere in Form von zwei entlang zueinander wirkenden Vorspannkomponenten oder Federvorrichtungen 645a, 645b und insbesondere jeweils in Form einer Feder aufweisen, die zwischen einer an dem zumindest einen zweiten Ende 641 b bzw. 642b befestigten Stützplatte 646 oder direkt an dem zumindest einen zweiten Ende 641 b bzw. 642b befestigten Stützplatte 646 und der Anlagevorrichtung 650 oder der Grundplatte 652 angeordnet ist und die Anlagevorrichtung 650 oder die Grundplatte 652 entlang der Bewegungsrichtung L656 der Stellteils 656 in eine Stellung von dem Aufnahmebehälter 40 aus gesehen in Richtung zu dem Formteil 30 vorspannt. Dabei ist die Anlagevorrichtung 650 oder die Grundplatte 652 mittels der Verbindungsvorrichtung 656 bzw. des Stellteils an der Führungsbahn 657 entlang der Bewegungsrichtung L656 geführt.

Die zu dieser Ausführungsform beschriebene Betätigungsvorrichtung mit der Anlagevorrichtung 650 und der Stützvorrichtung 640 kann in analoger Weise aus für andere Ausführungsformen realisiert sein, die an Hand er Figuren 7, 9,11,13 beschrieben sind.

Insbesondere kann vorgesehen sein, dass die Orientierung der durch die Betätigungsvorrichtung 630 bereitgestellten Bewegung oder der Bewegung der Anlagevorrichtung 650 insgesamt in einem Winkelbereich zwischen 90 Grad ±45 Grad und insbesondere zwischen 90 Grad ±60 Grad relativ zur Richtung der ersten Führungsbahn 611 verläuft. Bei einer gekrümmten ersten Führungsbahn 611 kann insbesondere vorgesehen sein, dass die durch die Betätigungsvorrichtung 530 bereitgestellte Bewegung insgesamt in einem Winkelbereich zwischen 20 Grad und 80 Grad und insbesondere zwischen 30 Grad und 60 Grad zu den lokalen Richtungen der ersten Führungsbahn 611 verläuft.

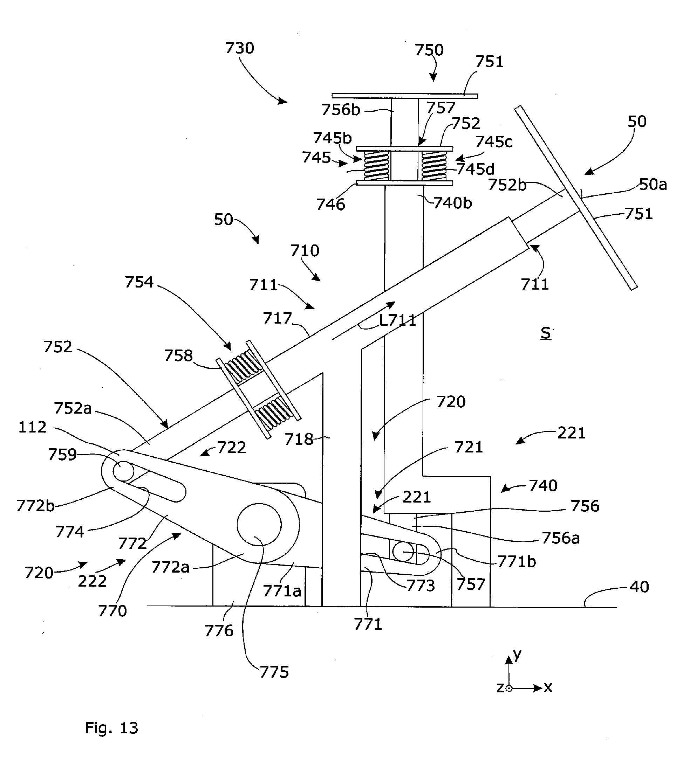

Die Figur 13 zeigt eine weitere Kombination einer ersten Führungsvorrichtung 710, einer zweiten Führungsvorrichtung 720 und einer Betätigungsvorrichtung 730 mit der Anlagevorrichtung 650, die Teil der Werkzeugvorrichtung 10 nach der Erfindung sein kann. Dabei ist die Betätigungsvorrichtung 730 nach oder im Wesentlichen nach den Figuren 11 und 12 ausgeführt.

Die Abdeckungsvorrichtung 50 der Werkzeugvorrichtung 10 nach der Figur 13 weist eine Abdeckungsplatte 751 und einen Basiskörper in Form einer Führungsstange 752 auf, die mit einem ersten Endabschnitt 752a an der Abdeckungsplatte 751 fixiert ist. Die Abdeckungsplatte 751 und die Führungsstange 752 können als einzelne Teile zusammen ein Teil bilden oder aus einem Stück gebildet sein. Die Führungsstange 752 ist längsverschiebbar in einer Längsrichtung L711 an einer Linearführung oder Längsführung 711 in Form eines Rohrabschnitts 717 gelagert, der an einer der Komponenten (a) dem Aufnahmebehälter 40, wie dargestellt, oder (b) dem Formteil 30 als hierin generell bezeichnete erste Formwerkzeug-Komponente fixiert ist. Auf diese Weise bilden die Führungsstange 752 und der Rohrabschnitt 717 die erste Führungsvorrichtung 710. Dabei ist der Rohrabschnitt 717 über eine Halterung 718 an der ersten Formwerkzeug-Komponente, also bei der gezeigten Ausführungsform an dem Aufnahmebehälter 40, fixiert. Auf diese Weise kann die Abdeckungsplatte 751 gegenüber dem Formteil 30 zwischen einer Abdeckungsstellung und einer Freigabestellung bewegt werden.

Wie in der Figur 13 dargestellt ist, kann zwischen dem Basiskörper bzw. der Führungsstange 752 oder einer an dieser ausgebildeten Halterung 758 und dem Rohrabschnitt 717 eine Vorspannvorrichtung 754 gelagert sein, die die Führungsstange 755 gegenüber dem Rohrabschnitt 717 in eine Stellung vorspannt, bei der die Abdeckungsplatte 759 an dem Formteil 30 anliegt. Alternativ dazu kann mit derselben Funktion, analog zu der Gestaltung der Abdeckungsvorrichtung 50 nach der Figur 1, eine Vorspannvorrichtung auch zwischen der Führungsstange 752 und der Abdeckungsplatte 759 gelagert sein, wenn die Führungsstange 752 und die Abdeckungsplatte 759 in der Längsrichtung L711 relativ zueinander bewegbar gelagert sind.

Die Figur 13 zeigt eine Ausführungsform von grundsätzlich zwei Ausführungsformen,
- bei der die erste Führungsvorrichtung die Abdeckungsvorrichtung 50 an einer der Komponenten (a) dem Aufnahmebehälter 40 oder (b) dem Formteil 30 als hierin generell bezeichnete erste Formwerkzeug-Komponente bewegungs-gekoppelt und die zweite Führungsvorrichtung die Abdeckungsvorrichtung 50 und die Anlagevorrichtung 750 bewegungs-koppelt,
- wobei bei einer Bewegung der ersten und der zweiten Formwerkzeug-Komponente von einer offenen in eine geschlossene Stellung des Formwerkzeugs 20 die Anlagevorrichtung 750 und die jeweilige zweite Formwerkzeug-Komponente bei einer als Formwerkzeug-Anlagestellung bezeichneten Zwischenstellung in Anlage miteinander gebracht wird und durch Führung der ersten und zweiten Führungsvorrichtung die Abdeckungsoberfläche 50a von einer Freigabestellung, bei der die Abdeckungsoberfläche 50a von der Formteil-Innenfläche 30a und die Anlagevorrichtung 750 von der Primär-Komponente abgesetzt ist, in Anlage mit einem Abdeckungsabschnitt 31 der Formteil-Innenfläche 30a bewegt wird.

Die zweite Führungsvorrichtung 720 weist auf:
- einen Kulissenkörper oder eine Kulissenkörper-Anordnung 770, der bzw. die drehbar an der ersten Formwerkzeug-Komponente gelagert ist,
- eine erste Kulissenkopplung 721, mit der der Kulissenkörper bzw. die Kulissenkörper-Anordnung 770 mit der Anlagevorrichtung 750 bewegungs-gekoppelt ist, und
- eine zweite Kulissenkopplung 722, mit der der Kulissenkörper bzw. die Kulissenkörper-Anordnung 770 mit der Abdeckungsvorrichtung 50 bewegungs-gekoppelt ist.

Durch die zweite Führungsvorrichtung 720 ist die Bewegung der Abdeckungsvorrichtung 50, die von der Bewegung der jeweiligen zweiten Formwerkzeug-Komponente und der daran anliegenden Anlagevorrichtung 750 verursacht ist, mit der Bewegung eines an der Anlagevorrichtung 750 fixierten Stellteils 756 koppelt.

Der Kulissenkörper 770 kann insbesondere aus einem ersten Schleifenkörper 771 und einem zweiten Schleifenkörper 772 gebildet sein, die jeweils mit einem ersten Endabschnitt 771 a bzw. 772a aneinander drehfest angeordnet sind oder beide für sich drehfest an einer Drehwelle 775 befestigt sind. Die Drehwelle ist auf einer Lagerungsaufnahme 776, die an dem Aufnahmebehälter 40 als erste Formwerkzeug-Komponente befestigt ist, drehbar gelagert. Die Schleifenkörper 771, 722 weisen jeweils eine Führungsnut 773 bzw. 774 auf, die jeweils an einem zweiten Endabschnitt 771 b bzw. 772b ausgebildet sind, das entgegen gesetzt zu dem jeweils ersten Endabschnitt 771 a bzw. 772a gelegen ist. Zur Ausbildung der ersten Kulissenkopplung 721 ist in der Führungsnut 773 ein Schleifenkörper 757 angeordnet und geführt, der an einem ersten Endabschnitt 756a des Stellteils 756, das entgegen gesetzt zu einem zweiten Endabschnitt 756b gelegen ist, ausgebildet ist. An dem zweiten Endabschnitt 756b ist die Anlagevorrichtung 750 fixiert oder befestigt. Zur Ausbildung der zweiten Kulissenkopplung 722 ist in der Führungsnut 774 ist ein Schleifenkörper 759 angeordnet und geführt, der an einem entgegengesetzt zu dem ersten Endabschnitt 752a gelegenen zweiten Endabschnitt 752b der Führungsstange 752 an derselben angeordnet ist.

Die Betätigungsvorrichtung 730 weist eine Anlagevorrichtung 750, die im Wesentlichen nach der in der Figur 9 dargestellten Anlagevorrichtung 550 gebildet ist. Die Betätigungsvorrichtung 730 weist eine Stützvorrichtung 740 auf, die mit einem ersten Endabschnitt 740a an dem Aufnahmebehälter 40 als der jeweiligen ersten Formwerkzeug-Komponente fixiert ist. Die Betätigungsvorrichtung 730 kann zumindest eine Vorspannvorrichtung 745 insbesondere in Form von zumindest zwei entlang zueinander wirkenden Vorspannkomponenten oder Federvorrichtungen 745a, 745b, 745c, 745d. und insbesondere jeweils in Form einer Feder aufweisen, die zwischen einer Stützplatte 746, die an einem entgegen gesetzt zu dem ersten Endabschnitt 740a gelegenen ersten Endabschnitt 740a der Stützvorrichtung 740 befestigt ist, und der Anlagevorrichtung 750 oder der an dieser befestigten Grundplatte 752 angeordnet ist. Die Vorspannvorrichtung 745 spannt die Anlagevorrichtung 750 oder die Grundplatte 752 entlang der Bewegungsrichtung L756 der Verbindungsvorrichtung oder des Stellteils 756 in eine Stellung von dem Aufnahmebehälter 40 aus gesehen in Richtung zu dem Formteil 30 vor. Dabei ist die Anlagevorrichtung 750 oder die Grundplatte 752 mittels der Verbindungsvorrichtung 756 bzw. des Stellteils an einer Führungsbahn 757, die an der Stützvorrichtung 740 entlang der Bewegungsrichtung L756 ausgebildet ist, geführt.

Die Betätigungsvorrichtung 730 weist auch ein Stellteil 756 auf, das an der Anlagevorrichtung 750 einerseits und mittels an dem ersten Schleifenkörper 771 als einer ersten Führungskomponente 221 der zweiten Führungsvorrichtung 720 andererseits fixiert ist, so dass zumindest in einem Bewegungsabschnitt mit dem Schließen des Formwerkzeugs 20, bei dem sich die Anlagevorrichtung 750 und das Formteil 30 als der jeweiligen zweiten Formwerkzeug-Komponente miteinander in Anlage befinden, die Relativbewegung zwischen der Anlagevorrichtung 750 und dem Aufnahmebehälter 40 als der ersten Formwerkzeug-Komponente auf den ersten Schleifenkörper 771 als der ersten Führungskomponente 221 der zweiten Führungsvorrichtung 720 bzw. auf die erste Kulissenkopplung 721 und von dort auf den zweiten Schleifenkörper 772 als der zweiten Führungskomponente 222 der zweiten Führungsvorrichtung 720 bzw. auf die zweite Kulissenkopplung 722 übertragen wird. Dadurch wird die Bewegung der Abdeckungsvorrichtung 50 und insbesondere des Basiskörpers 752 gegenüber dem Formteil 30 zwischen der Freigabe- und der Abdeckungsstellung geführt.

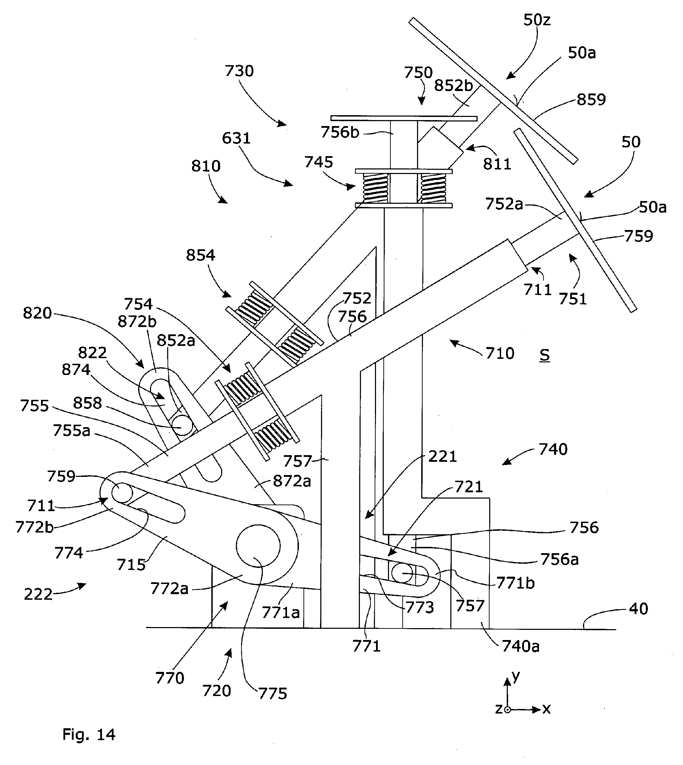

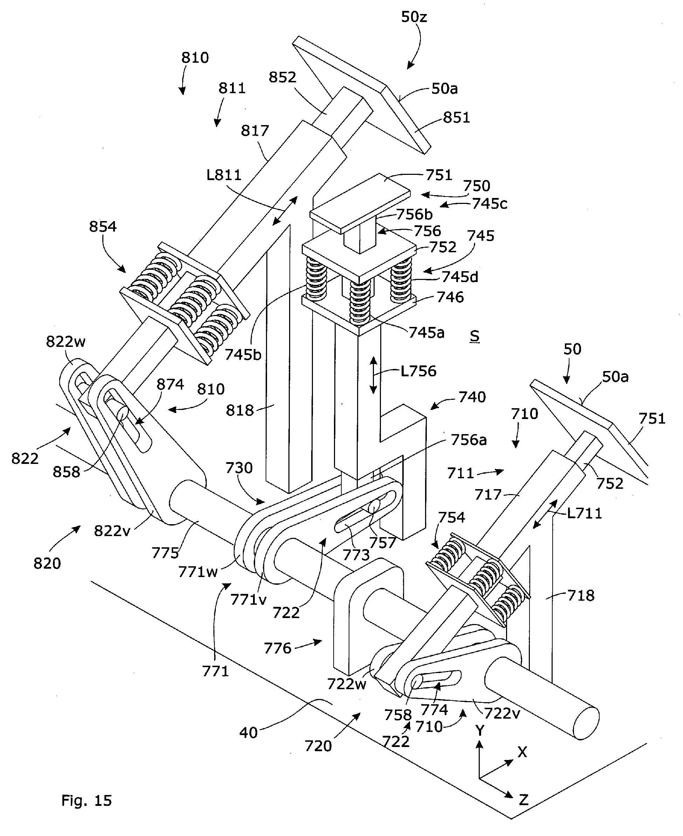

Die Ausführungsform gemäß der Figuren 14 und 15 basiert auf der Ausführungsform der Figur 13 und weist die Betätigungsvorrichtung 730 mit dem in der Stützvorrichtung 740 geführten Stellteil 756 auf, die nach der Figur 13 oder im Wesentlichen nach den Figuren 11 und 12 ausgeführt ist.

Die Ausführungsform der Figuren 14 und 15 weisen zwei Abdeckungsvorrichtungen 50, 50z und zwei erste Führungsvorrichtungen 710,810 auf, wobei sowohl die ersten Führungsvorrichtungen 710, 810 als auch die Abdeckungsvorrichtungen 50, 50z in zueinander gleicher Weise ausgeführt sind. Die Abdeckungsvorrichtungen 50, 50z weisen jeweils eine Abdeckungsplatte 751 bzw. 851 und einen Basiskörper in Form einer Führungsstange 752 bzw. 852 auf, die mit einem ersten Endabschnitt 752a bzw. 852a an der Abdeckungsplatte 751 bzw. 851 fixiert ist. Die Führungsstangen 752 bzw. 852 sind jeweils längsverschiebbar in einer Längsrichtung L711 bzw. L811 an einer Längsführung 711 bzw. 811 in Form eines Rohrabschnitts 717 bzw. 817 gelagert, der an einer der Komponenten (a) dem Aufnahmebehälter 40, wie dargestellt, oder (b) dem Formteil 30 als hierin generell bezeichnete erste Formwerkzeug-Komponente fixiert ist. Auf diese Weise bilden die Führungsstangen 755 bzw. 855 und die Rohrabschnitte 717 bzw. 817 zusammen zwei erste Führungsvorrichtungen 710 bzw. 810. Dabei ist der Rohrabschnitt 717 bzw. 817 über jeweils eine Halterung 718 bzw. 818 an der ersten Formwerkzeug-Komponente, also bei der gezeigten Ausführungsform an dem Aufnahmebehälter 40, fixiert. Auf diese Weise kann die Abdeckungsplatte 751 bzw. 851 gegenüber dem Formteil 30 zwischen einer Abdeckungsstellung und einer Freigabestellung bewegt werden.

Die Werkzeugvorrichtung 10 nach den Figuren 14 und 15 weist auch zwei zweite Führungsvorrichtungen 720, 820 auf, mit denen jeweils die Bewegung einer jeweiligen Abdeckungsvorrichtung 50 bzw. 50z, die von der Bewegung der jeweiligen zweiten Formwerkzeug-Komponente und der daran anliegenden Anlagevorrichtung 750 verursacht ist, mit der Bewegung eines an der Anlagevorrichtung 750 fixierten Stellteils 756 koppelt. Die zwei zweiten Führungsvorrichtungen 720, 820 sind gebildet durch:
- eine Kulissenkörper-Anordnung 770, die drehbar an der ersten Formwerkzeug-Komponente gelagert ist,
- eine erste Kulissenkopplung 721, mit der die Kulissenkörper-Anordnung 770 mit der Anlagevorrichtung 750 bewegungs-gekoppelt ist, und
- zwei zweite Kulissenkopplungen 722, 822, mit der jeweils die Kulissenkörper-Anordnung 770 mit der Abdeckungsvorrichtung 50 bewegungs-gekoppelt ist.

Die Kulissenkörper-Anordnung 770 ist aus einem ersten Schleifenkörper 771 und zwei zweiten Schleifenkörpern 772, 872 gebildet, die jeweils mit einem ersten Endabschnitt 771 a bzw. 772a, 872a drehfest an der Drehwelle 775 befestigt sind. Die Drehwelle 775 ist auf einer Lagerungsaufnahme 776, die an dem Aufnahmebehälter 40 als erste Formwerkzeug-Komponente befestigt ist, drehbar gelagert. Die Schleifenkörper 771, 722, 822 weisen jeweils eine Führungsnut 773 bzw. 774 bzw. 874 auf, die jeweils an einem zweiten Endabschnitt 771 b bzw. 772b bzw. 872b ausgebildet sind, das entgegen gesetzt zu dem jeweils ersten Endabschnitt 771 a bzw. 772a bzw. 872a gelegen ist. Zur Ausbildung der ersten Kulissenkopplung 721 ist in der Führungsnut 773 der Schleifenkörper 757 angeordnet und geführt, der an einem ersten Endabschnitt 756a des Stellteils 756, das entgegen gesetzt zu einem zweiten Endabschnitt 756b gelegen ist, ausgebildet ist. An dem zweiten Endabschnitt 756b ist die Anlagevorrichtung 750 fixiert oder befestigt. Zur Ausbildung der zweiten Kulissenkopplungen 722, 822 ist in der jeweiligen Führungsnut 774 bzw. 874 jeweils ein Schleifenkörper 758 bzw. 858 angeordnet und geführt, der an einem entgegengesetzt zu dem ersten Endabschnitt 752a bzw. 852a gelegenen zweiten Endabschnitt 752b bzw. 852b der Führungsstange 752 bzw. 852 an derselben angeordnet ist.

Jeder Schleifenkörper kann auch als Schleifenkörper-Paar mit jeweils zwei in Längsrichtung der Drehwelle 775 gesehen übereinander gelegenen Schleifenkörpern 771 v, 771 w, 722v, 722w bzw. 822v, 822w ausgeführt sein, die gleich gestaltet und ausgerichtet sein können, wie der Figur 15 gezeigt ist.

Die Betätigungsvorrichtung 730 der Werkzeugvorrichtung 10 nach den Figuren 14 und 15 ist wie die Betätigungsvorrichtung 730 der Werkzeugvorrichtung 10 nach der Figur 13 gestaltet, so dass zumindest in einem Bewegungsabschnitt mit dem Schließen des Formwerkzeugs 20, bei dem sich die Anlagevorrichtung 750 und das Formteil 30 als der jeweiligen zweiten Formwerkzeug-Komponente miteinander in Anlage befinden, die Relativbewegung zwischen der Anlagevorrichtung 750 und dem Aufnahmebehälter 40 als der ersten Formwerkzeug-Komponente auf den ersten Schleifenkörper 771 als der ersten Führungskomponente 221 der zweiten Führungsvorrichtung 720 bzw. auf die erste Kulissenkopplung 721 und von dort auf die zweiten Schleifenkörper 772, 872 als der jeweils zweiten Führungskomponente 222 der zweiten Führungsvorrichtung 720, 820 bzw. auf die jeweils zweite Kulissenkopplung 722, 822 übertragen wird. Dadurch wird die Bewegung der Abdeckungsvorrichtung 50 und insbesondere des Basiskörpers 752, 852 gegenüber dem Formteil 30 zwischen der Freigabe- und der Abdeckungsstellung geführt.

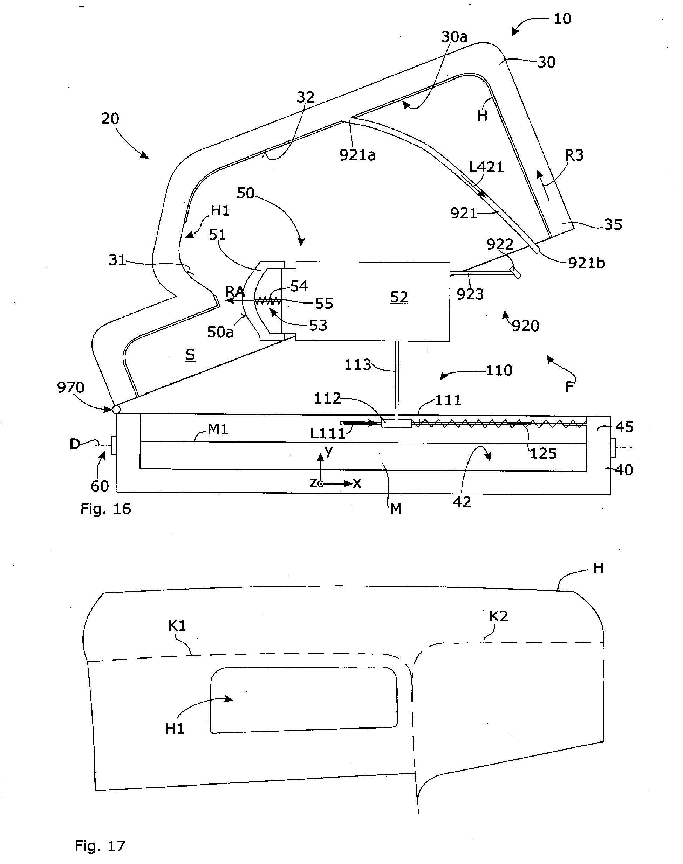

Die in der Figur 16 dargestellte Ausführungsform basiert auf der Ausführungsform der Figur 1, ist jedoch auf sämtliche der hierin beschriebenen Ausführungsformen anwendbar. Im Gegensatz zur Figur 1 ist die Öffnungs- und Schließvorrichtung 970 als Drehlagerungsvorrichtung ausgeführt, durch die das Formteil 30 und der Aufnahmebehälter 40 an zueinander benachbarten Stellen des Randabschnitts 35 des Formteils 30 und des Randabschnitts 45 des Aufnahmebehälters 40 aneinander drehgelagert sind. Die zweite Führungsvorrichtung 920 der Führungsanordnung F ist an dem Formteil 30 fixiert oder angebracht. Ein an der Abdeckungsvorrichtung 50 über eine Verbindungsvorrichtung 923 beispielsweise in Form eines Haltearms fixiertes oder angebrachtes zweites Koppelteil 922 befindet sich in einer Führungskopplung mit der zweiten Führungsbahn 921, so dass das zweite Koppelteil 122 entlang der zweiten Führungsbahn 921 durch diese geführt bewegbar ist. Bei der dargestellten Ausführungsform ist die zweite Führungsbahn 921 mit einem ersten Ende 921 a an dem Formteil 30 angebracht und weist ein freies Ende 921 b auf, das entgegen gesetzt zu dem ersten Ende 922a gelegen ist. Der Verlauf der zweiten Führungsbahn 921 hängt von deren Lage, der Lage der Abdeckungsvorrichtung 50 und der Lage der Drehlagerungsvorrichtung 970 ab.

Bei sämtlichen Ausführungsformen des Formwerkzeugs 10 nach der Erfindung kann die Öffnungs- und Schließvorrichtung als Vorrichtung realisiert sein,
- die eine Öffnungs- und Schließbewegung des Formteils 30 relativ zum Aufnahmebehälter 40 mit einer translatorischen Bewegungskomponente bereitstellt (insbesondere gemäß der Figuren 1 bis 6), oder
- die durch Kopplung des Formteils 30 und des Aufnahmebehälters 40 mittels einer Drehlagerungsvorrichtung 870 eine rotatorische Öffnungs- und Schließbewegung des Formteils 30 relativ zum Aufnahmebehälter 40 bereitstellt (Figur 7).

Die Führungsbahnen der erfindungsgemäß vorgesehenen Führungsvorrichtungen können stabförmig ausgeführt sein.

In der Figur 17 ist ein Beispiel eines Kunststoff-Hautstücks H dargestellt, das mit einer Werkzeugvorrichtung 10 nach der Erfindung herstellbar ist. Das Kunststoff-Hautstück H weist eine Ausnehmung H1 auf. Weiterhin sind in dem dargestellten Kunststoff-Hautstück H auf schematische Weise Konturlinien K1, K2 kenntlich gemacht.

## Patentansprüche

1. Werkzeugvorrichtung (10) zur Herstellung eines Kunststoff-Hautstücks (H), die Werkzeugvorrichtung (10) aufweisend:
- ein Formwerkzeug (20), das aus einem Formteil (30) mit einer Formteil-Innenfläche (30a), einem Aufnahmebehälter (40) und einer Öffnungs- und Schließvorrichtung (70) gebildet ist,
- zumindest eine Abdeckungsvorrichtung (50) mit einer Abdeckungsoberfläche (50a) und
- eine Anlagevorrichtung (450, 550, 650, 750),
- eine Führungsanordnung (F) mit einer ersten und einer zweiten Führungsvorrichtung, wobei die erste Führungsvorrichtung die Abdeckungsvorrichtung (50) an einer der Komponenten (a) dem Aufnahmebehälter (40) oder (b) dem Formteil (30) als erste Formwerkzeug-Komponente bewegungs-koppelt, wobei die zweite Führungsvorrichtung (420, 520) die Abdeckungsvorrichtung (50) und die Anlagevorrichtung (450) bewegungs-koppelt,
- eine Betätigungsvorrichtung (430; 530, 630,730), die die Anlagevorrichtung (450, 550, 650,750) und diejeweils andere der Komponenten (a) oder (b) als eine zweite Formwerkzeug-Komponente bewegungs-koppelt,
wobei bei einer Bewegung der ersten und der zweiten Formwerkzeug-Komponente von einer offenen in eine geschlossene Stellung die Anlagevorrichtung und die jeweilige zweite Formwerkzeug-Komponente bei einer Formwerkzeug-Anlagestellung in Anlage miteinander gebracht wird und durch Führung der ersten und zweiten Führungsvorrichtung die Abdeckungsoberfläche (50a) von einer Freigabestellung, bei der die Abdeckungsoberfläche (50a) von der Formteil-Innenfläche (30a) und die Anlagevorrichtung von der Primär-Komponente abgesetzt ist, in Anlage mit einem Abdeckungsabschnitt (31) der Formteil-Innenfläche (30a) bewegt wird.

2. Werkzeugvorrichtung (10) nach dem Anspruch 1, wobei die Betätigungsvorrichtung (430) die Anlagevorrichtung (450, 550, 650,750) mit dem Aufnahmebehälter (40) koppelt, wobei die Anlagevorrichtung in der geschlossenen Stellung des Formwerkzeugs (20) in der Abdeckungsstellung an der Formteil-Innenfläche (30a) gelegen ist, wobei die Anlagevorrichtung an einer ersten Führungskomponente (221) fixiert ist, die mit einer an der Abdeckungsvorrichtung (50) fixierten zweiten Führungskomponente (222) bewegungs-gekoppelt ist.

3. Werkzeugvorrichtung (10) nach dem Anspruch 1 oder 2, wobei die erste Führungsvorrichtung (110) eine sich in einer Längsrichtung flächig erstreckende erste Führungskomponente (221) und die zweite Führungsvorrichtung (120) eine sich in einer Längsrichtung flächig erstreckende zweite Führungskomponente (222) aufweist, die bei einer Bewegung von Formteil (30) und Aufnahmebehälter (40) in ihre geschlossene Stellung in Anlage miteinander sind, dabei entlang ihren jeweiligen Längsrichtungen aneinander geführt sind und die Bewegung von Formteil (30) und der Aufnahmebehälter (40) relativ zueinander in die geschlossene Stellung in eine Bewegung der Abdeckungsvorrichtung (50) in die Abdeckungsstellung umzulenken.

4. Werkzeugvorrichtung (10) nach dem Anspruch 1 oder 2, wobei die zweite Führungsvorrichtung (420) nach einer der beiden folgenden Alternativen gebildet ist:
- die zweite Führungsvorrichtung (420) weist auf: eine Führungsbahn (421), die an der Abdeckungsvorrichtung (50) fixiert ist, und ein an dieser bewegbar geführtes zweites Koppelteil (422), das an der Anlagevorrichtung (450) fixiert ist,
- die zweite Führungsvorrichtung (420) weist auf: eine Führungsbahn (421), die an der Anlagevorrichtung (450) fixiert ist, und ein an dieser bewegbar geführtes zweites Koppelteil (422), das an der Abdeckungsvorrichtung (50) fixiert ist.

5. Werkzeugvorrichtung (10) nach dem Anspruch 4, wobei die Verbindungsvorrichtung (343) mit einem dritten Koppelteil (442) verbunden ist und wobei das dritte Koppelteil (343) an eine dritte Führungsbahn (341) gekoppelt ist, die an dem Aufnahmebehälter (40) oder einem Stützabschnitt (45) desselben befestigt ist.

6. Werkzeugvorrichtung (10) nach dem Anspruch 1, wobei zweite Führungsvorrichtung (720) aufweist:
- eine Kulissenkörper-Anordnung (770), die drehbar an der ersten Formwerkzeug-Komponente gelagert ist,
- eine erste Kulissenkopplung (721), mit der die Kulissenkörper-Anordnung (770) mit der Anlagevorrichtung (750) bewegungs-gekoppelt ist,
- eine zweite Kulissenkopplung (722), mit der die Kulissenkörper-Anordnung (770) mit der Abdeckungsvorrichtung (50) bewegungs-gekoppelt ist.

7. Werkzeugvorrichtung (10) nach einem der vorstehenden Ansprüche, wobei die Werkzeugvorrichtung (10) eine Vorspannvorrichtung (645) aufweist, die die Anlagevorrichtung (650) in eine Stellung von dem Aufnahmebehälter (40) aus gesehen in Richtung zu dem Formteil (30) vorspannt.

8. Werkzeugvorrichtung (10) zur Herstellung eines Kunststoff-Hautstücks (H), die Werkzeugvorrichtung (10) aufweisend:
- ein Formwerkzeug (20), das aus einem Formteil (30) mit einer Formteil-Innenfläche (30a), einem Aufnahmebehälter (40) und einer Öffnungs- und Schließvorrichtung (70) gebildet ist, mit der das Formteil (30) und der Aufnahmebehälter (40) relativ zueinander zwischen einer geschlossenen und einer offenen Stellung bewegbar sind,
- zumindest eine Abdeckungsvorrichtung (50) mit einer Abdeckungsoberfläche (50a) und
- eine Führungsanordnung (F) mit einer ersten Führungsvorrichtung (110, 210, 310), durch die die Abdeckungsvorrichtung (50) mit einer der Komponenten (a) dem Aufnahmebehälter (40) oder (b) dem Formteil (30) bewegungsgekoppelt ist, und mit einer zweiten Führungsvorrichtung (120, 220, 320, 420), die die Abdeckungsvorrichtung (50) an diejenige der Komponenten (a) oder (b) koppelt, die nicht mit der ersten Führungsvorrichtung (110, 210, 310) bewegungsgekoppelt ist, wobei durch die Führungsanordnung (F) die Abdeckungsvorrichtung (50) zwischen einer Abdeckungsstellung, bei der die Abdeckungsoberfläche (50a) einen Abdeckungsabschnitt (31) der Formteil-Innenfläche (30a) abdeckt, und einer Freigabestellung bewegbar ist, bei der die Abdeckungsoberfläche (50a) von der Formteil-Innenfläche (30a) abgesetzt ist, wobei die Bewegung zwischen der Abdeckungsstellung und der Freigabestellung mechanisch mit der Bewegung des Formteils (30) relativ zum Aufnahmebehälter (40) gekoppelt ist.

9. Werkzeugvorrichtung (10) nach dem Anspruch 8, wobei die erste Führungsvorrichtung (110, 210, 310) als eine an der Abdeckungsvorrichtung (50) angeordnete sich in einer Längsrichtung flächig erstreckende erste Führungskomponente (221) und die zweite Führungsvorrichtung (120, 220, 320, 420) als eine sich in einer Längsrichtung flächig erstreckende zweite Führungskomponente (222) ausgebildet ist, die an einer der Komponenten (a) oder (b) angeordnet ist, die nicht mit der ersten Führungsvorrichtung (110, 210) bewegungsgekoppelt ist, wobei die erste Führungskomponente (221) und die zweite Führungskomponente (222) bei einer Anlage-Zwischenstellung von Formteil (30) und Aufnahmebehälter (40) aneinander zur Anlage kommen und sich bei Annäherung von Formteil (30) und Aufnahmebehälter (40) in ihren Längsrichtungen entlang zueinander bewegen und dabei die Abdeckungsvorrichtung (50) von der Freigabestellung in die Abdeckungsstellung bringen.

10. Werkzeugvorrichtung (10) nach dem Anspruch 8 oder 9, wobei die zweite Führungsvorrichtung (120) nach einer der beiden folgenden Alternativen gebildet ist:
- die zweite Führungsvorrichtung (120) weist auf: eine zweite Führungsbahn (121), die als zweite Führungskomponente (222) an der Abdeckungsvorrichtung (50) fixiert ist, und ein an dieser bewegbar geführtes zweites Koppelteil (422), das an dem Formteil (30) fixiert ist,
- die zweite Führungsvorrichtung (120) weist auf: eine zweite Führungsbahn (121), die als zweite Führungskomponente (222) an dem Formteil (30) fixiert ist, und ein an dieser bewegbar geführtes zweites Koppelteil (422), das an der Abdeckungsvorrichtung (50) fixiert ist.

11. Werkzeugvorrichtung (10) nach einem der Ansprüche 8 bis 10, wobei die zweite Führungsvorrichtung (220) aufweist: eine erste Führungskomponente (221) und eine zweite Führungskomponente (222), die bei einer Bewegung von Formteil (30) und Aufnahmebehälter (40) in ihre geschlossene Stellung in Anlage miteinander sind, dabei entlang ihrer jeweiligen Längsrichtung aneinander geführt sind und die Bewegung von Formteil (30) und der Aufnahmebehälter (40) relativ zueinander in die geschlossene Stellung in eine Bewegung der Abdeckungsvorrichtung (50) in die Abdeckungsstellung umzulenken.

12. Werkzeugvorrichtung (10) nach dem Anspruch 11, wobei die erste Führungskomponente (221) eine erste äußere Führungs-Oberfläche (221 a) und die zweite Führungskomponente (222) eine zweite Führungs-Oberfläche (222a) aufweist, die an einer an dem Formteil (30) angeordneten und in dem Innenraum S gelegenen Halterung (226) ausgebildet ist, und die erste äußere Führungs-Oberfläche (221 a) und die zweite Führungskomponente (222) eine zweite Führungs-Oberfläche (222a) zwischen der Anlage-Zwischenstellung und der Abdeckungsstellung aneinander gleiten.

13. Werkzeugvorrichtung (10) nach dem Anspruch 11, wobei die erste Führungskomponente (221) oder die zweite Führungskomponente (222) eine Führungs-Oberfläche und die jeweils andere der Führungskomponenten (222, 221) eine Rollenvorrichtung aufweist und die Führungs-Oberfläche und die Rollenvorrichtung zwischen der Anlage-Zwischenstellung und der Abdeckungsstellung aneinander gleiten.

14. Werkzeugvorrichtung (10) nach einem der Ansprüche 8 bis 13, wobei die erste Führungsvorrichtung (110,210) nach einer der folgenden beiden Alternativen gebildet ist:
- die erste Führungsvorrichtung (110, 210) weist auf: eine erste Führungsbahn (111, 211), die an dem Aufnahmebehälter (40) fixiert ist, und ein an der Abdeckungsvorrichtung 50 fixiertes oder angebrachtes erstes Koppelteil (112, 212), das sich in einer Führungskopplung mit der ersten Führungsbahn (111, 211) befindet, so dass das erste Koppelteil (112, 212) entlang der ersten Führungsbahn (111, 211) bewegbar ist;
- die erste Führungsvorrichtung (110, 210) weist auf: eine erste Führungsbahn, die an der Abdeckungsvorrichtung fixiert ist, und ein an dem Aufnahmebehälter fixiertes oder angebrachtes erstes Koppelteil, das sich in einer Führungskopplung mit der ersten Führungsbahn befindet, so dass das erste Koppelteil entlang der ersten Führungsbahn bewegbar ist.

15. Werkzeugvorrichtung (10) nach einem der voranstehenden Ansprüche, wobei die Abdeckungsvorrichtung (50) einen Basiskörper (52) und einen an diesem bewegbar angeordneten Abdeckungskörper (51) aufweist.
